# NEUE EUROPÄISCHE PATENTSCHRIFT

(11) **EP 1 599 346 B2**
(45) Veröffentlichungstag und Bekanntmachung des Hinweises auf die Entscheidung über den Einspruch: **21.02.2018**
(45) Hinweis auf die Patenterteilung: 07.05.2008
(21) Anmeldenummer: 03767369.6
(22) Anmeldetag: 30.12.2003
(51) Int. Cl.: B32B 27/32, B41M 3/14

(54) **MEHRSCHICHTLAMINAT**
MULTIPLE LAYER LAMINATE
STRATIFIE MULTICOUCHE

(30) Priorität: 27.02.2003 CH 301032003; 28.05.2003 CH 963032003
(43) Veröffentlichungstag der Anmeldung: 30.11.2005
(60) Teilanmeldung: 08005568.4
(73) Patentinhaber: Landqart AG, 7302 Landquart (CH)
(72) Erfinder: SMITH, Paul, CH-8006 Zürich (CH); GROB, Jakob, CH-7303 Mastrils (CH); FELDMAN, Kirill, Ch-8050 Zürich (CH)
(74) Vertreter: Bremi, Tobias Hans
(86) Internationale Anmeldenummer: PCT/CH2003/000850
(87) Internationale Veröffentlichungsnummer: WO 2004/076198

(56) Entgegenhaltungen:
- EP-A- 1 122 089
- EP-A1- 1 070 599
- EP-A2- 0 290 875
- EP-A2- 0 453 131
- EP-A2- 1 122 089
- WO-A-99/67093
- WO-A1-93/12940
- WO-A1-97/10107
- WO-A1-99/54550
- AU-A- 7 376 274
- GB-A- 1 220 080
- JP-A- H0 216 771
- US-A- 3 165 432
- US-A- 3 414 998
- US-A- 3 880 706
- US-A- 4 278 722
- US-A- 4 507 349
- US-A- 4 507 349
- US-A- 4 629 638
- US-A- 4 999 065
- US-A- 5 296 307
- US-A- 5 296 307
- US-A- 5 393 099
- US-A- 5 393 099
- US-A- 5 449 200
- US-A1- 2001 055 655
- US-A1- 2002 176 973
- US-A1- 2002 182 430
- BRANDRUP J. ET AL: 'Polymer Handbook', Bd. 3TH ED., 1989, JOHN WILEY & SONS, INC. Seiten V/19,23,29,30 AND 102 - VI/214,221,222 AND 234
- WADDON A.J. ET AL: 'The temperature window of minimum flow resistance in melt flow of polyethylene. Further studies on the effect of strain rate and branching' J. POLYMER SCIENCE Bd. 30, Nr. PART B, 1992, Seiten 923 - 929
- MEYER B.: 'Textbook of Polymer Science (extract)', 1966, JOHN WILEY & SONS, INC., NEW YORK Seiten 364, - 370-372
- MARKS. ET AL: 'Polymer Science Dictionary', Bd. ED.: 2, 1997, SPRINGER Seite 445
- BRYDSON J.A.: 'Plastics Materials', Bd. 3TH ED., 1977, BUTTERWORTH GROUP, LONDON Seiten 400 - 402
- HANS-GEORG ELIAS: 'Makromoleküle', Bd. BD. 1, 1990, HÜTHIG & WEPF VERLAG, BASEL Seiten 848 - 850 (WÄHREND DER PRÜFIUNG VON T307/06 ZITIERT)
- Liste von Glassübergangstemperaturen von verschiedenen polymeren, von der Webseite www.atomer.fr
- "Poly(methyl methacrylate)" Webseite, von en.wikipedia.org
- CHAN I. CHUNG: 'Extrusion of Polymers: Theory and Practice', 2000, HANSER PUBLISHERS, MUNICH Seiten 87 - 154-157
- Kopie der Norm ISO 11357-1 (Anlage 2)
- Kopie der Norm ISO 11357-2 (Anlage 3)
- technisches Merkblatt zu Polyamid Grilamid TR 90 TX (Anlage 4)
- technisches Merkblatt zu Polyamid Grivory G 21 (Anlage 5)
- Auszug aus Wikipedia (Anlage 6)
- STOECKERT K.: 'Kunststogg-Lexikon', Bd. 7. AUFL., 1981, CARL HANSER VERLAG, MÜNCHEN Seiten 379 - 380

## Beschreibung

### TECHNISCHES GEBIET

Die vorliegende Erfindung betrifft ein Mehrschichtlaminat, welches beispielsweise als Druckträger, insbesondere als Sicherheitspapier, aber auch als Verpackungsmaterial, Abdeckungsmaterial, Kartensubstrat, etc. Verwendung finden kann. Das Mehrschichtlaminat umfasst wenigstens eine Kunststoffschicht mit einer Ober- und einer Unterseite, eine mit der Kunststoffschicht verbundene obere Papierlage auf der Oberseite der Kunststoffschicht sowie ggf. eine mit der Kunststoffschicht verbundene untere Papierlage auf der Unterseite der Kunststoffschicht.

### STAND DER TECHNIK

Kombinationen von Papier und Kunststoff in einem Laminat finden vielfältige Verwendung. Üblicherweise wird durch ein derartiges Laminat die Widerstandsfähigkeit von Papier erhöht (Reissfestigkeit, Verschmutzungsresistenz, etc.). Typische Verwendungen von derartigen Laminaten sind beispielsweise Verpackungsmaterialien, bedruckt oder unbedruckt, Abdeckungsmaterialien wie Tischdecken, Einlagen für Schubladen etc., Geschenkpapier, etc.. Derartige Laminate finden aber auch Anwendung als Druckträger beispielsweise als Deckblätter für Journale, als Glückwunschkarten, als Substrat für Landkarten, und, bisher jedoch in geringem Masse, als Sicherheitspapier insbesondere als Banknote. Typischerweise werden dabei die Kunststoffschicht und die Papierlage über einen Haftvermittler verbunden.

Die langjährige Diskussion über die Vor- und Nachteile von Papier und Polymermaterialien als Substrate für Banknoten ist nunmehr in eine reife Phase gelangt. Obwohl die Polymersubstrate auch heute nicht mehr als einige Prozent Marktanteil am Banknotenmarkt haben und ihre erfolgte Einführung teilweise als Fehlentscheidung erachtet wurde, sind doch bestimmte Eigenschaften der Banknoten aus Polymermaterial als Fortschritt erachtet worden und könnten das Eigenschaftsportfolio der erfolgreichen Papiernoten sinnvoll ergänzen, sofern eine Synthese aus beiden Produkten technisch denkbar wäre.

Weitere Zielgrössen sind darüber hinaus neben der Fälschungssicherheit des neuen Substrates die Bedruckbarkeit mit konventionellen Banknotendruckverfahren sowie die Kompatibilität mit den üblichen Sortiermaschinen und Bankautomaten, aber eben auch weitere Sicherheitsmerkmale, die ohne oder nur mit einfachen Hilfsmitteln erkennbar sind.

Parallel zu dieser Entwicklung fand in den letzten Jahren eine Diskussion über das Für und Wider des Papiersubstrates gegenüber dem Polymersubstrat statt. Die Kunststoffnoten, die insbesondere im australischen Markt ihren Kernmarkt haben, weisen dagegen den Vorteil des günstigeren Anti-Ageing Verhalten im Sinne der mechanischen Stabilität und der Anschmutzbarkeit auf. Daneben ist bei den Polymernoten häufig ein Klarsichtfenster integriert, das in dieser Form in Papiernoten bisher nicht demonstriert worden ist. Das Klarsichtfenster ist in der Diskussion als Erststufenmerkmal von hohem Wert eingestuft worden, im Urteil einiger Experten allerdings das einzige polymertypische Sicherheitsmerkmal von Wert.

Obwohl die Polymernoten bis heute nur einige Prozent des Banknotenmarktes erobert haben, übten diese doch auf die Marktteilnehmer einen erheblichen Druck aus und veranlassten andere Hersteller ebenfalls synthetische bzw. halbsynthetische Substrate zu lancieren, ohne jedoch in spürbarem Umfang einen Markterfolg zu generieren. Bei den Zentralbanken herrscht heute überwiegend die Meinung, dass die Zukunft dennoch dem Papier gehört, dieses aber in einer weiteren Evolutionsstufe zusätzlich bestimmte wünschenswerte Eigenschaften des Polymers erhalten sollte. In diesem Kontext sei bemerkt, dass mancher Banknotenherausgeber seine Entscheidung zur Einführung von Polymernoten wieder zu Gunsten des Papiers revidiert hat. Zusammen mit dem Bedürfnis nach neuen Erststufenmerkmalen lässt sich deutlich der Wunsch nach einer Papiernote mit möglichem integriertem Klarsichtfenster und vielleicht weiteren Erststufenmerkmalen ausmachen. Je nach Anwendung (Gebrauchshäufigkeit, Klima, etc.) lassen sich noch Wünsche nach hoher Reissfestigkeit oder geringerer Anschmutzbarkeit ("Anti-Soiling Verhalten") feststellen.

Die herkömmlichen Banknotenpapiere basieren traditionell auf Baumwolle als Hauptfaserrohstoff. Daneben werden auch Flachs, synthetische Fasern und Leinen zur Verstärkung der mechanischen Festigkeiten beigemischt. Es handelt sich dabei nicht nur um nachwachsende Rohstoffe, im Fall der Baumwollkämmlinge wird zudem ein Nebenprodukt der Spinnereiindustrie einer sinnvollen Verwendung zugeführt, was die Nachhaltigkeit der Banknotenpapierherstellung aus ökologischer Sicht nur verstärkt. Mit Hilfe von Zusatzstoffen werden die hohen Werte für Nassfestigkeit erreicht.

Seit den 70er Jahren sind Multitonwasserzeichen im Banknotenbereich üblich, die im Laufe der Jahre ständig verfeinert wurden. Seit der Einführung der Rundsiebtechnologie gehören Sicherheitsfäden im Papier zum Stand der Technik. Auch hier wurden laufend neue Varianten wie Fensterfäden, breite Fäden oder personalisierte Fäden eingeführt. Sicherheitsmerkmale, die durch einfache Zugabe in den Faserstoff in den Herstellprozess eingeführt werden können wie z. B. Pigmente oder Tracerfasern, sind leicht in das Papier zu integrieren, andererseits durch einen Fälschungsprozess, der auf Druckverfahren beruht, meist nur schwer zu imitieren. Dies begründet den Wert des Papiers für Sicherheitsanwendungen und machen es seit langem zu einem bevorzugten Substrat für Banknoten.

Durch die offene Porenstruktur der Papiersubstrate sind diese anfällig gegen Verschmutzungen und haben damit in Bezug auf ihre Umlaufzeit als Banknoten eine begrenzte Lebensdauer. Seit Ende der 90er Jahre begegnet man diesem Problem mit Banknotensubstraten, die mit Hilfe eines dünnen Striches eine versiegelte Oberfläche aufweisen. Nachteilig wirkt sich dabei oft eine ungenügende Abstimmung von Druckfarbe und Oberflächenstrich aus, die auch wiederum einer höheren Lebenserwartung der Banknoten entgegenwirkt.

Erste Versuche zur Einführung einer Banknote auf Polymerbasis wurden für Haiti unternommen. Ein weiterer Versuch ist für die Isle of Man bekannt. Das Material litt aber aufgrund seiner extrem hydrophoben Eigenschaften unter einer starken Verschmutzungsanfälligkeit in Bezug auf oleophile Substanzen.

In gewisser Weise als erfolgreich können die Bemühungen in Australien gelten, wo noch heute derartige Banknoten Verwendung finden, der Erfolg wäre allerdings nicht ohne die spezifisch für dieses Substrat entwickelten Druckfarben denkbar. Die zur Anpassung der Farben an diese spezifischen Bedingungen erforderlichen Zusätze verhindern aber die zur Verfügungstellung von bestimmten Farbtönen.

Ursache für den relativ bescheidenen Markterfolg der Polymersubstrate dürfte die insgesamt geringe Zahl an Sicherheitsmerkmalen sein, die überhaupt mit diesem Material demonstriert worden ist. Als nennenswertes Merkmal wäre hier wie schon erwähnt lediglich das Klarsichtfenster aufzuzeigen. Der Fensterteil des Substrates lässt neue Sicherheitsmerkmale zu, die transparente Bereiche bedingen. Andererseits führt der Mehraufwand für den Druck und die hohen Substratkosten zu einem Gesamtaufwand, der auch bei stark beanspruchten Noten kaum durch die höhere Lebensdauer gerechtfertigt werden kann.

Im Folgenden werden in einer sehr kompakten Form einige Vorteile von Papier- und Polymersubstraten (insbesondere biaxial gerecktes Polypropylen PP) für die Verwendung als Banknotensubstrate aufgelistet:
Vorteile Papier:
   ∘ Griff und Klang von der Öffentlichkeit in hohem Masse akzeptiert
   ∘ Möglichkeit der Einbringung von Wasserzeichen
   ∘ Einfache Integrierbarkeit von faserigem Material (Melierfasern) in versteckter oder offensichtlicher Form
   ∘ Funktionelle Additive oder (hydrophile) Polymere können in einfacher Weise inkorporiert werden
   ∘ Beständig gegen übliche Lösungsmittel
   ∘ Sehr gute Bedruckbarkeit und Druckfarbenhaftung
   ∘ Gute thermische Beständigkeit
   ∘ Niedriger, akzeptierter Preis
Vorteile von Kunststoff (PP)-Substrat:
   ∘ Relativ geringe Anschmutzbarkeit aufgrund der geringeren Hydrophilie
   ∘ Einfache Integrierbarkeit von transparenten oder zumindest freiliegenden Kunststoffbereichen
   ∘ Exzellente Reissfestigkeit bei Gebrauchstemperatur

Damit zeigt das Polymer insbesondere einen Vorteil in Bezug auf die Möglichkeit einer Integrierbarkeit eines "Fensters", die mechanischen Festigkeiten bei Raumtemperatur sowie die Anschmutzbarkeit. Es gilt also, das Papiersubstrat zu optimieren und gewissermassen die positiven Eigenschaften von Polymeren in das Papiersubstrat einfliessen zu lassen.

Ein Versuch der Kombination der positiven Eigenschaften von papier-basierten Druckträgern mit den positiven Eigenschaften von Kunststofffolien ist in der US 5,449,200 beschrieben. Dabei wird vorgeschlagen, zwischen zwei Papierschichten eine Kunststoffschicht vorzusehen, wobei diese Kunststoffschicht bedruckt ist, sodass der entsprechende Aufdruck nur in Transmission sichtbar ist, nicht aber in Reflexion. Die Verbindung zwischen Kunststoffschicht und den Papierschichten wird hergestellt, indem die Schichten laminiert werden, wobei ein Adhäsiv zur Anwendung kommt. Problematisch an diesem Ansatz ist die inakzeptabel grosse Gefahr einer Delaminierung von derartigen Substraten, wenn sie in den Umlauf gebracht werden.

### DARSTELLUNG DER ERFINDUNG

Der Erfindung liegt demnach die Aufgabe zugrunde, ein neues Mehrschichtlaminat, z.B. als neuen Druckträger insbesondere aber nicht ausschliesslich für Sicherheitsanwendungen, aber auch für andere Anwendungen wie beispielsweise als Verpackungsmaterial, Etikettenmaterial, Abdeckungsmaterial, als Umschlagmaterial etc., zur Verfügung zu stellen. Das Mehrschichtlaminat respektive bevorzugt der Druckträger soll dabei möglichst mindestens einige der positiven Eigenschaften von einem Papierträger mit den positiven Eigenschaften von Kunststoffträgern vereinen, ohne neue Nachteile zu zeigen. Dabei geht es um Mehrschichtlaminat respektive um einen Druckträger umfassend wenigstens eine Kunststoffschicht, welche ggf. mehrlagig ausgebildet sein kann, mit einer Ober- und einer Unterseite, sowie wenigstens eine mit der Kunststoffschicht verbundene obere Papierlage auf der Oberseite der wenigstens einen Kunststoffschicht. Optional kann ausserdem eine mit der Kunststoffschicht verbundene untere Papierlage auf der Unterseite der Kunststoffschicht angeordnet sein, d.h. es kann die Kunststoffschicht beidseitig von Papier umgeben sein.

Die Lösung dieser Aufgabe wird durch die Merkmale von Anspruch 1 erreicht, indem es sich bei der Kunststoffschicht um ein (oder mehrere) thermoplastisches polymeres Material handelt, und dass die Verbindung zwischen der Papierlage und der Kunststoffschicht im wesentlichen ohne zusätzlichen Haftvermittler jeweils durch Penetrationszonen, in welchen Teile der Kunststoffschicht mit der Masse des Faserverbunds der Papierlage verschmolzen sind, gewährleistet ist, wobei sich die Penetrationszonen im wesentlichen nicht gänzlich bis zu den der Kunststoffschicht abgewandten Oberflächen der Papierlage erstreckt. Weiterhin weist erfindungsgemäss wenigstens eine Papierlage ein Sicherheitsmerkmal auf und/oder die Kunststoffschicht weist wenigstens ein Sicherheitsmerkmal in Form eines elektrischen, elektronischen, magnetischen oder optischen Informationsmittels oder einer Kombination derartiger Informationsmittel auf. Aufgrund der beidseitig auf der Kunststoffschicht angeordneten Papierlagen (obere und untere Papierlage) ist eine derartige Verschmelzung mit Penetrationszonen mit beiden Papierlagen gegeben.

Der Kern der Erfindung besteht somit in der erstaunlichen Erkenntnis, dass sich Papierschichten und thermoplastische Kunststoffschichten trotz deren sehr unterschiedlichen chemischen Verhaltens (technischer Thermoplast vs. Zellulose) teilweise miteinander verschmelzen lassen, wobei eine äusserst stabile und innige Verbindung zwischen Papierschicht und Kunststoffschicht entsteht. Verschmelzen bedeutet in diesem Zusammenhang, dass der Thermoplast die Zellulose umfliesst und diese als Matrix einbettet. Während nämlich Laminate nach dem Stand der Technik unter Verwendung von reaktiven Adhäsiven oder von lösungsmittelbasierten Adhäsiven als Haftvermittler zwischen Papier und Kunststoffschicht das Problem aufweisen, bei stark belastenden Verwendungen wie beispielsweise als Verpackungsmaterial, Etikettenmaterial, Abdeckungsmaterial oder Umschlagmaterial und insbesondere bei der äusserst beanspruchenden Verwendung als Banknoten zu delaminieren, kann dies durch ein erfindungsgemässes (Mehrschicht-)Laminat verhindert werden. Das erfindungsgemässe Laminat stellt die Verbindung dadurch zur Verfügung, dass oberste Schichten der Kunststoffschicht mit untersten Schichten der Papierlagen direkt verschmolzen werden, d. h. dass die Fasern der Papierlagen in eine Kunststoffmatrix wenigstens teilweise eingebettet sind. Die dabei entstehenden Penetrationszonen in den jeweiligen Grenzbereichen zwischen Kunststoffschicht und Papierlage werden dabei so eingestellt, dass der Kunststoff die Papierlagen zwar teilweise durchdringt, ohne aber vollständig bis zur der Kunststoffschicht abgewandten Oberfläche der Papierlage(n) hindurch zu treten. Dies gewährleistet, dass auf der einen Seite die haptischen Eigenschaften des Papiers am resultierenden Druckträger erhalten bleiben, und dass auf der anderen Seite die Druckeigenschaften des Mehrschichtlaminats respektive Druckträgers ebenfalls im wesentlichen gleich bleiben. Durchdringt nämlich Kunststoff den Papierträger vollständig bis zur Oberfläche oder nahe bis zur Oberfläche, so ändert sich nicht nur der Griff, sondern auch die Porosität (führt gewissermassen zu einem Versiegeln), was die Haftung von Druckfarben oder Tinten massiv erschweren kann und deren Abrieb erleichtern kann.

Auf der anderen Seite führt die Durchdringung der Papierschichten mit dem Thermoplasten auch zu einer Reduktion der Verschmutzungsanfälligkeit (anti-soiling), welche durchaus gewünscht sein kann. Die anti-soiling-Eigenschaften zusammen mit den haptischen und den Druckeigenschaften können somit über den Grad der Durchdringung der Papiermatrix mit dem Thermoplasten gesteuert werden.

Aus dem Dokument US 5,296,307 ist in einem völlig anderen Zusammenhang, namentlich dem Gebiet der Beschichtungsmaterialien für elektrische Leiter, ein Laminat bekannt, welches eine Schicht aus Polyolefin mit speziellen anorganischen Zusätzen zur Erhöhung der Isolationswirkung und eine Papierlage aufweist, wobei bei der Herstellung die Polyolefinlage leicht aufgeschmolzen wird. Das Laminat ist dadurch resistenter bei der Anordnung von Leitern in isolierenden Ölen.

Die Kunststoffschicht ist erfindungsgemäss als einzelne Schicht aus einem einzigen Material aufgebaut.

Gemäss einer ersten bevorzugten Ausführungsform der vorliegenden Erfindung handelt es sich bei mindestens einer der Papierlagen um Papier, welches in einer Rundsiebmaschine hergestellt wurde. Alternativ kann auch eine Langsiebmaschine oder eine Steilsiebmaschine verwendet werden. Vorzugsweise handelt es sich dabei z.B. um ein typisches Banknoten-Papier, d. h. um ein Papier, welches unter Verwendung von Baumwolle (typischerweise Hauptfaserrohstoff), und/oder Flachs, und/oder Leinen, als Faserrohstoff hergestellt wurde.

Die gewünschten Eigenschaften in Bezug auf Verschmelzung zwischen Kunststoffschicht und Papierlagen lassen sich vorzugsweise erreichen, indem als Material für die Kunststoffschicht ein polymeres Material mit einer Glasübergangstemperatur oder Schmelztemperatur im Bereich von 50 bis 250 °C, bevorzugt im Bereich von 75 bis 225 °C, oder im Bereich von 100 bis 200 °C, insbesondere bevorzugt von 120 bis 180 °C verwendet wird. Grundsätzlich sollte es sich um einen Thermoplasten handeln, welcher bei einer Temperatur zu schmelzen oder aufzuweichen beginnt, bei welcher das Papier keinen Schaden nimmt. Es handelt sich beim polymeren Material erfindungsgemäss um ein transparentes, teil-amorphes oder vollamorphes Polyamid, insbesondere bevorzugt um ein Polyamid auf der Basis aliphatischer und cycloaliphatischer Bausteine. Transparentes Polymeres Material ist insbesondere dann vorteilhaft, wenn die Möglichkeit von klaren transparenten Fenstern oder wenigstens einseitig freiliegenden transparenten Bereichen vorgesehen ist. Es ist aber auch möglich, als polymeres Material ein eingefärbtes respektive nicht transparentes Material zu verwenden, auch teiltransparente Materialien sind denkbar. Derartige Polymere sind beispielsweise von der Firma EMS-CHEMIE (CH) unter dem Handelsnamen GRILAMID®, GRILON® oder GRIVORY® erhältlich. Diese Materialien können bei Bedarf entsprechend eingefärbt werden und/oder weitere funktionelle Komponenten enthalten. Als Farbstoffe kommen Farbstoffe im sichtbaren Bereich, aber auch fluoreszierende oder phosphoreszierende Farbstoffe in Frage. Ausserdem kann das thermoplastische Material magnetische Komponenten, elektrisch leitende Komponenten, thermochrome oder photochrome Komponenten, UV-Absorber etc. oder mehrere dieser Komponenten gleichzeitig enthalten.

Grundsätzlich kommen als Material für die Kunststoffschicht folgende Polymere in Frage:
Polyamide und Copolyamide abgeleitet von Diaminen and Dicarbonsäuren und/oder von Aminocarbonsäuren oder den korrespondierenden Lactamen, beispielsweise Polyamid 4, Polyamid 6, Polyamid 6/6, 6/10, 6/9, 6/12, 4/6, 12/12, Polyamid 11, Polyamid 12, aromatische Polyamide ausgehend von m-Xyloldiamin und Adipinsäure; Polyamide hergestellt ausgehend von Hexamethylendiamin und Isophthal- und Terephthalsäure und mit oder ohne Elastomer als Modifikator, beispielsweise Poly-2,4,4,-trimethylhexamethylenterephthalamid oder Poly-m-phenylenisophthalamid; und auch Blockcopolymere von den genannten Polyamiden mit Polyolefinen, Olefincopolymeren, Ionomeren oder chemisch gebundenen oder gepfropten Elastomeren; oder mit Polyethern, z. B. mit Polyethylenglycol, Polypropylenglycol oder Polytetramethylenglycol; sowie auch Polyamiden oder Copolyamiden modifiziert mit EPDM oder ABS; und Polyamide kondensiert während der Herstellung (RIM Polyamid-systeme).

Mischungen von zwei oder mehreren dieser genannten Polymere oder Coolymere sind ebenfalls möglich.

Wesentlich ist wie gesagt die Fliessfähigkeit des verwendeten Thermoplasten. Entsprechend können alternativ auch Thermoplasten verwendet werden, deren Glasübergangstemperatur oder Schmelztemperatur unterhalb der oben angegebenen Glasübergangstemperaturen liegt, welche aber im Rahmen der Gebrauchstemperatur eines Produkts (z.B. Banknote) im festen Zustand sind und deren Fliesstemperatur im Bereich von 50 bis 250 °C, bevorzugt im Bereich von 75 bis 225 °C, oder im Bereich von 100 bis 200 °C, insbesondere bevorzugt von 120 bis 180 °C liegt.

Die Erfindung zeichnet sich dadurch aus, dass die Papierlagen ein Flächengewicht im Bereich von 20 bis 50 g/m² aufweisen. Erfindungsgemäss weist die Kunststoffschicht eine Dicke im Bereich von 20 bis 50 µm auf. Der Druckträger weist erfindungsgemäss insgesamt ein Flächengewicht im Bereich von 80 bis 150 g/m², auf, bevorzugt von im Bereich von 90 bis 120 g/m².

Wesentlich im Zusammenhang mit dem vorgeschlagenen Mehrschichtlaminat respektive Druckträger ist es, dass er mit der Vielzahl von aus dem Bereich der reinen Papierträger bekannten Sicherheitsmerkmalen kombiniert wird. Dazu werden derartige Sicherheitsmerkmale, einfach in wenigstens eine der Papierlagen entweder vor dem Laminationsprozess eingebaut, während oder danach. Als Sicherheitsmerkmale kommen die verschiedensten Arten und Typen in Frage, ganz allgemein also z. B. Sicherheitsmerkmale mit entsprechenden Informationsmitteln optischer, elektronischer, elektrischer oder magnetischer Natur, so zum Beispiel Wasserzeichen, insbesondere Graustufen-Wasserzeichen, Sicherheitsfäden, sogenannte optically variable devices (OVDs), Melierfasern, Sicherheitspigmente, irisierende Farbapplikationen, Mirkoperforationen, Mikrodrucke, Offset, Tiefdruck, Magnetstreifen, Chips etc.. Ebenso kann die Kunststoffschicht mit Sicherheitsmerkmalen versehen werden. Dabei kann es sich in der einfachsten Ausführung um einen Aufdruck handeln, welcher in Reflexion infolge der darüber liegenden Papierschichten nicht sichtbar ist (und entsprechend zum Beispiel mit einem Kopiergerät auch nicht reproduziert werden kann), welcher aber in Transmission erkannt werden kann. Es kommen aber bei der Kunststoffschicht auch andere Sicherheitsmerkmale, insbesondere im Bereich von den unten erwähnten Fenstern, in Frage, so zum Beispiel fluoreszierende Bereiche, polarisierende Bereiche, polarisiert fluoreszierende Bereiche, polarisiert absorbierende Bereiche, photochrome Bereiche, Hologramme, Prägen (Embossing), etc..

Das erfindungsgemässe Mehrschichtlaminat respektive der erfindungsgemässe Druckträger weist den aussergewöhnlichen Vorteil auf, dass er, trotz Erscheinung und Griff wie Papier, die Möglichkeit bietet, zusätzliche Informationen als Sicherheitsmerkmale sowie insbesondere Sicherheitsmerkmale in Form von oder eingebaut in Fenstern einzubauen.

Als Fenster ist in diesem Zusammenhang nicht ausschliesslich ein transparenter Bereich zu verstehen, welcher rundum (von Papier) begrenzt ist, ein Fenster im Sinne der vorliegenden Erfindung kann rundum begrenzt sein, kann aber auch beim endgültigen bestimmungsgemässen Mehrschichtlaminat respektive Druckträger derart am Rand angeordnet sein, dass der Fensterbereich direkt an den Rand grenzt. Als Fenster ist grundsätzlich auch nicht ausschliesslich eine Aussparung zu verstehen, welche einen transparenten Bereich beinhaltet, sondern auch Aussparungen, welche eingefärbte sowie beispielsweise fluoreszierende, phosphoreszierende, polarisierende, optisch brechende oder holographische Kunststoffbereiche freilegen. Ebenfalls vorgesehen sind bei erfindungsgemässen Mehrschichtlaminaten, welche beidseitig mit Papier beaufschlagt sind, Aussparungen, bei welchen nur das Papier auf einer Seite die Kunststoffschicht freilegt. Auch entsprechende Kombinationen sind möglich, bei welchen beispielsweise die Aussparungen in den zwei Papierbahnen nicht deckungsgleich ausgebildet sind, sodass einerseits Bereiche entstehen, bei welchen die Kunststoffschicht von beiden Seiten zugänglich ist, und andererseits wenigstens ein weiterer Bereich, bei welchem die Kunststoffschicht nur von einer Seite zugänglich ist.

Das Fenster selbst und viele der in das Fenster integrierten Informationsträger oder Sicherheitsmerkmale stellen so genannte First-Level Sicherheitsmerkmale, da sie ohne Zuhilfenahme von technischen Geräten von Auge vom Mann auf der Strasse leicht verifiziert werden können. Derartige Sicherheitsmerkmale, wenn sie so gut wie nicht reproduziert werden können, weisen einen aussergewöhnlich hohen Stellenwert auf. Beim erfindungsgemässen Druckträger wird ein Fenster zur Verfügung gestellt werden, indem wenigstens eine der Papierlagen eine durchgängige Aussparung aufweist, sodass die Kunststoffschicht in diesem Bereich freiliegt (einseitiges Fenster zum Beispiel für den Blick auf ein Sicherheitsmerkmal der Kunststoffschicht). Ein richtig transparentes Fenster bei Verwendung einer transparenten Kunststoffschicht wird zur Verfügung gestellt, indem beide Papierlagen eine derartige Aussparung in wenigstens teilweise überlappender Weise unter Bildung eines Fensters aufweisen. Dabei erweist es sich als sicherheitstechnisch interessant, derartige Aussparungen einen unregelmässigem Rand und/oder sanfte Übergänge ohne Kanten zwischen Papier und Fenster aufweisen zu lassen. Erstaunlicherweise treten beim erfindungsgemässen Druckträger die ansonsten insbesondere im Zusammenhang mit Fenstern komplexer Aussenlinie auftretenden Probleme des Ablösens von Papierlagen von der Kunststoffschicht im Randbereich so gut wie nicht auf.

Um eine homogene Dicke des Mehrschichtlaminats respektive Druckträgers gewährleisten zu können, ist es ausserdem möglich, im Bereich der Aussparung bei der Herstellung eine weitere Kunststofflage mit der gleichen oder einer ähnlichen Kontur wie das Fenster in das Fenster hineinzulegen.

Grundsätzlich zeigt es sich, dass insbesondere der Bereich des Fensters respektive der einseitigen Aussparung für die Anordnung von Sicherheitsmerkmalen in der Kunststofffolie besonders gut geeignet sind. So können beispielsweise in diesen Bereichen Sicherheitsmerkmale mit polarisierenden Eigenschaften eingebaut werden. Ebenso eignen sich derartige Fenster sehr gut für so genannte "self-verifying" Eigenschaften, d. h. die Verifikation von anderen Sicherheitsmerkmalen unter Zuhilfenahme des Fensters. So können beispielsweise polarisierende Eigenschaften eines Sicherheitsmerkmals dadurch verifiziert werden, dass ein Fensterbereich mit ebenfalls polarisierenden Transmissionseigenschaften durch Falten der Banknote über das Sicherheitsmerkmal gelegt wird.

Weitere bevorzugte Ausführungsformen des erfindungsgemässen Druckträgers sind in den abhängigen Ansprüchen beschrieben.

Weiterhin betrifft die vorliegende Erfindung ein Verfahren zur Herstellung eines Mehrschichtlaminats wie beispielsweise eines Druckträgers, wie er oben beschrieben wurde. Vorzugsweise wird so vorgegangen, dass in einem Laminator die wenigstens eine Papierlage mit der Kunststoffschicht wenigstens teilweise verschmolzen wird, wobei eine Temperatur von im Bereich von 50 bis 250 °C, bevorzugt im Bereich von 75 bis 225 °C, oder im Bereich von 100 bis 200 °C, insbesondere bevorzugt von 140 bis 180 Grad verwendet wird. Vorzugsweise wird ausserdem ein Druck von im Bereich von 10 Pa bis 10 MPa, bevorzugt von 1kPa bis 10 MPa, oder von 1kPa bis 5 MPa, insbesondere bevorzugt von im Bereich von 0.5 MPa bis 2 MPa verwendet. Dabei kann ein Programm gefahren werden, z. B. indem zunächst die Temperatur erhöht wird und anschliessend der Druck, oder umgekehrt. Das Verfahren kann entweder batchweise in Pressen geschehen, kann aber auch kontinuierlich geführt werden. Bei kontinuierlicher Führung werden entsprechend die einzelnen Träger von Rollen zugeführt, und es handelt sich beim Laminator um einen Rollenlaminator, wobei die Kunststoffschicht und ggf. auch Sicherheitsmerkmale wie Sicherheitsfäden mittig zugeführt wird und die beiden Papierlagen von oben respektive von unten.

Wird ein Fenster ausgelassen, so muss in den Prozess ein Aussparungsaggregat eingebaut werden, in welchem z.B. mit Laser, Wasserstrahl, unter Stanzen oder ähnlichem die Aussparungen in den Papierbahnen registriert vorgenommen werden.

Weitere bevorzugte Ausführungsformen des erfindungsgemässen Verfahrens sind in den weiteren abhängigen Ansprüchen beschrieben.

Zudem betrifft die vorliegende Erfindung die Verwendung eines derartigen Druckträgers als Sicherheitspapier, insbesondere als Banknote, Check, Ticket, Zertifikat, Aktiendokument, Obligationendokument, Urkunden, Ausweispapiere, Verpackungsmaterial, Etikettenmaterial, Umschlagmaterial, Abdeckungsmaterial etc..

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: ein Mehrschichtlaminat mit mittlerer Kunststoffschicht nach dem Stand der Technik in einem Schnitt;
- Fig. 2: ein Mehrschichtlaminat mit mittlerer Kunststoffschicht gemäss der Erfindung in einem Schnitt;
- Fig. 3: eine Aufsicht auf ein Mehrschichtlaminat;
- Fig. 4: einen Schnitt gem. Fig. 2 in einer alternativen Darstellung ;
- Fig. 5: einen Schnitt gem. Fig. 4, wobei Randverschmelzungen dargestellt sind ;
- Fig. 6: a) einen Schnitt durch ein nicht anspruchsgemässes Ausführungsbeispiel mit nur einer Papierlage und Aussparungen im Randbereich, b) einen Schnitt gem. Fig. 4, wobei wenigstens ein an den Rand grenzendes Fenster dargestellt ist und beidseitig Papier angeordnet ist; c) eine Aufsicht auf Teile eines Substrats gem. Fig. 6b);
- Fig. 7: einen Schnitt durch ein Mehrschichtlaminat mit verschiedenen Aussparungen ;
- Fig. 8: einen Schnitt durch ein Mehrschichtlaminat mit einer Vielzahl von Schichten ;
- Fig. 9: a)-c) Schnitte durch Mehrschichtlaminate mit unterschiedlichen Penetrationstiefen, wobei c) nicht erfindungsgemäss ist, d) einen Schnitt durch ein Mehrschichtlaminat mit lokal unterschiedlichen Penetrationstiefen;

- Fig. 10: eine Aufsicht a) sowie einen Schnitt b) durch ein Mehrschichtlaminat mit Diskontinuitäten in der Kunststoffschicht;
- Fig. 11: eine schematische Darstellung der Anordnung der Schichtstruktur vor dem Laminieren;
- Fig. 12: eine Darstellung der Tests zur Ermittlung der Festigkeit der Bindung zwischen den Papierlagen und der Kunststoffschicht;
- Fig. 13: eine schematische Darstellung des Ausgangsmaterials zur Herstellung eines Druckträgers mit Randverschmelzung ;
- Fig. 14: eine Aufsicht auf ein Mehrschichtlaminat mit einem Fenster respektive einer Aussparung welche die Papierlagen auf der einen Seite vollständig voneinander trennt;
- Fig. 15: eine Aufsicht auf ein Ausführungsbeispiel mit selbstverifizierenden Sicherheitsmerkmal ; und
- Fig. 16: eine Aufsicht a) sowie einen Schnitt b) durch ein weiteres Ausführungsbeispiel mit selbst-verifizierenden Sicherheitsmerkmalen.

### WEGE ZUR AUSFÜHRUNG DER ERFINDUNG

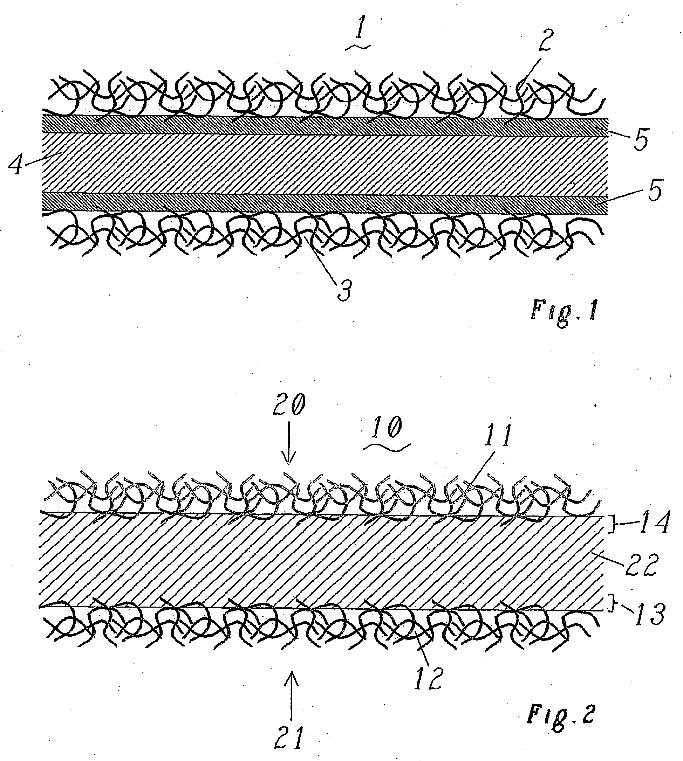

Fig. 1 zeigt einen Schnitt durch einen Druckträger in Form eines Sicherheitspapiers 1 nach dem Stand der Technik. Ein derartiges Mehrschichtlaminat (z.B. in Form eines Sicherheitspapiers) 1 ist beispielsweise in der US 5,449,200 beschrieben. Es handelt sich dabei um eine Schichtstruktur umfassend eine zentrale Kunststoffschicht 4, welche auf beiden Seiten von einer Papierlage 2 respektive 3 bedeckt ist. Als Haftvermittler zur Befestigung der Papierlagen an der Kunststoffschicht 4 wird ein unter UV härtendes reaktives Adhäsiv verwendet, welches als separate Schicht 5 erkennbar ist. Derartige Schichtstrukturen nach dem Stand der Technik weisen das Problem auf, dass sie insbesondere bei der sehr intensiven Benutzung, wie sie bei Banknoten üblich ist, die Tendenz haben, zu delaminieren, d. h. nach einer gewissen Umlaufzeit beginnen die Papierlagen 2,3, sich von der Kunststoffschicht 4 abzulösen. Dieses Delaminieren resultiert unter anderem aus dem häufigen Falten von Banknoten.

Fig. 2 zeigt nun einen erfindungsgemässen Druckträger 10. In diesem Fall ist eine zentrale Kunststofffolie oder Kunststoffschicht 22 aus einem thermoplastischen, transparenten Kunststoff direkt auf der Oberseite 20 sowie auf der Unterseite 21 mit Papierlagen 11 respektive 12 bedeckt. Die Kunststoffschicht 22 ist hier als einzige Schicht dargestellt. Ein Adhäsiv wird zur Haftvermittlung nicht verwendet, die Verbindung zwischen Papierlagen 11 respektive 12 und der Kunststoffschicht 22 wird in diesem Fall durch Penetrationszonen 13 und 14 gewährleistet. In diesen Penetrationszonen 13, 14 durchdringt das Material der Kunststoffschicht 22 die jeweilige Papierlage bis in eine bestimmte Tiefe. Ein gewisser Teil der Papierlagen ist entsprechend in einer Matrix von Kunststoff mehr oder weniger vollständig eingebettet, sodass eine äusserst beständige und innige Verbindung zwischen den einzelnen Lagen gewährleistet wird. Diese gewissermassen "verschmolzenen" Zonen 13 respektive 14 (unter dem Begriff verschmolzen ist hier zu verstehen, dass in diesen Zonen die Kunststoffschicht gewissermassssen als Matrix Teile der Papierschicht umgibt) dürfen aber nicht völlig in die Papierlagen 11 respektive 13 hineinreichen, da ansonsten die Oberflächeneigenschaften der Papierlagen auf den der Kunststoffschicht 22 abgewandten Seiten modifiziert werden.

Bei den Papierlagen 11 und 12 handelt es sich z.B. um ein banknotenähnliches Papier mit einem Flächengewicht von 40g/m², möglich ist aber grundsätzlich ein Gewicht im Bereich von 20 bis 50 g/m². Die Papierlagen 11 und 12 enthalten entsprechend als Hauptfasermaterial cellulosische Materialien wie Baumwolle und sind z.B. auf einer Rundsiebmaschine hergestellt. Das Papier einer dieser Lagen enthält z.B. ein Graustufen-Wasserzeichen, eine besonders grosse Sicherheit kann optional dadurch gewährleistet werden, indem in den beiden Papierlagen 11 respektive 12 unterschiedliche Wasserzeichen in registrierter Art und Weise angeordnet sind.

Bei der Kunststoffschicht 22 handelt es sich um eine Folie z.B. der Dicke 40 µm aus vollamorphem, transparenten Polyamid. Derartige Folien können beispielsweise bei der EMS-CHEMIE(CH) unter dem Handelsnamen GRILAMID® TR90 LX oder unter dem Namen GRIVORY® G21 bezogen werden.

Das Mehrschichtlaminat oder Sicherheitspapier gemäss Fig. 2 wurde hergestellt, indem die drei Lagen in einem Laminat_oder übereinander gelegt wurden, anschliessend 30 Sekunden aufgeheizt wurde und dann auf dieser Temperatur 30 Sekunden lang gepresst wurde. Dabei zeigte sich, dass bei der Verwendung von GRIVORY® G21 eine Temperatur von 120 °C zur Verschmelzung mit dem Papier genügend war, während bei der Verwendung von GRILAMID® TR90 LX eine Temperatur von 180 °C besser war. Die Verwendung von GRILAMID® TR90 LX führte aber zu mechanisch stabileren Trägern. In der Phase erhöhten Druckes wurde mit einem Druck von ca. 1MPa gearbeitet (Fläche von 0.2 * 0.2 m, 4 Tonnen).

In einem kontinuierlichen Rollenprozess kann mit einem Liniendruck im Bereich von 1-500 N/mm gearbeitet werden.

Ein Vergleich der mechanischen Eigenschaften des Sicherheitspapiers gemäss Fig. 2 mit dem Träger einer Schweizer 100 SFr. Banknote ist in Tabelle 1 dargestellt.

| **Eigenschaft** | **Einheit** | **Laminat** | **100sFr.-Note** |
|---|---|---|---|
| **Gewicht** | **g/m²** | **105** | **91** |
| **Dicke** | **µ** | **115** | **113** |
| **Spez. Volumen** | **cm³/g** | **1.09** | **1.25** |
| **Berstdruck** | **kPa** | **340** | **360** |
| **Bruchkraft** | **längs** | **117** | **106** |
| **Bruchkraft** | **quer** | **89** | **63** |
| **Bruchkraft** | **mittel** | **103** | **84** |
| **Falzzahl** | **längs** | **11000** | **2162** |
| **Falzzahl** | **quer** | **3750** | **2088** |
| **Elmendorf (1Bl)** | **längs** | **910** | **1000** |
| **Elmendorf (1Bl)** | **quer** | **1006** | **1200** |
| **Steifigkeit, Balken** | **längs** | **0.79** | **0.56** |
| **Steifigkeit, Balken** | **quer** | **0.53** | **0.25** |

Dabei ist erkennbar, dass insbesondere die Falzzahl des neuen Sicherheitspapiers massiv überlegen ist, sowie in Bezug auf das Aussehen und die mechanischen Eigenschaften nach einer vollständigen Durchnässung (Waschmaschinentest).

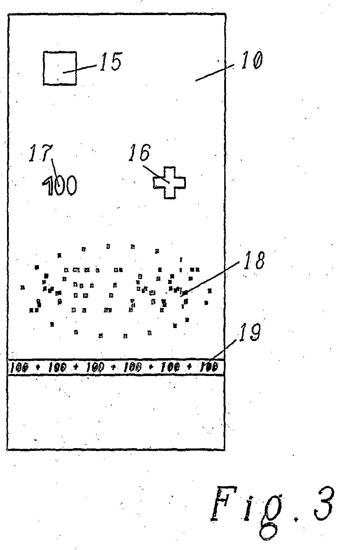

Fig. 3 zeigt einen weiteren wesentlichen Aspekt der vorliegenden Erfindung, nämlich dass das erfindungsgemässe Laminat besonders gut mit unterschiedlichsten Sicherheitsmerkmalen kombiniert werden kann. So können beispielsweise in einer oder in beiden Papierlagen Sicherheitsstreifen 19 eingebaut werden, es ist möglich, wie bereits weiter oben erwähnt, in wenigstens einer der Papierlagen Wasserzeichen 18 vorzusehen, die bei transparenter Kunststoffschicht 22 sehr gut sichtbar sind. Ausserdem, und dies ist wohl eine der hervorstechenden Eigenschaften dieses Laminates, ist es möglich, Fenster als Sicherheitsmerkmale vorzusehen. Fenster bedeutet, dass die Papierlagen im Bereich des Fensters eine Aussparung aufweisen, während die Kunststoffschicht durchgängig ist. Beispielsweise ist mit dem Bezugszeichen 15 ein rechteckiges Fenster angegeben, das Fenster kann aber auch eine komplexe Aussenlinie aufweisen, wie dies beispielsweise mit der Zahl (Bezugszeichen 17) als auch mit dem Schweizer Kreuz (Bezugszeichen 16) illustriert wird.

Derartige Fenster lassen nun ausserdem äusserst interessante Kombinationen von Sicherheitsmerkmalen zu. So ist es beispielsweise möglich, die Kunststofffolie 22 polarisierend auszugestalten. Wird nun die Banknote 10 derart gefaltet, dass das Fenster 15 über das Zeichen 17 zu liegen kommt (Faltlinie parallel zur kurzen Seite der Banknote), so ist es möglich, durch beide Fenster hindurch zu sehen, da die beiden Polarisationsrichtungen parallel liegen. Wird nun aber das Fenster 15 durch Falten der linken oberen Ecke nach schräg rechts unten über das Fenster 16 gelegt, so werden die beiden Polarisationsrichtungen orthogonal liegen und entsprechend die beiden Fenster in Durchsicht dunkel erscheinen. Komplexere Effekte können erreicht werden, wenn ausserdem unterschiedliche Farben ins Spiel gebracht werden, und wenn ausserdem in den Bereichen verschiedener Fenster unterschiedliche Polarisationsrichtungen ausgebildet werden.

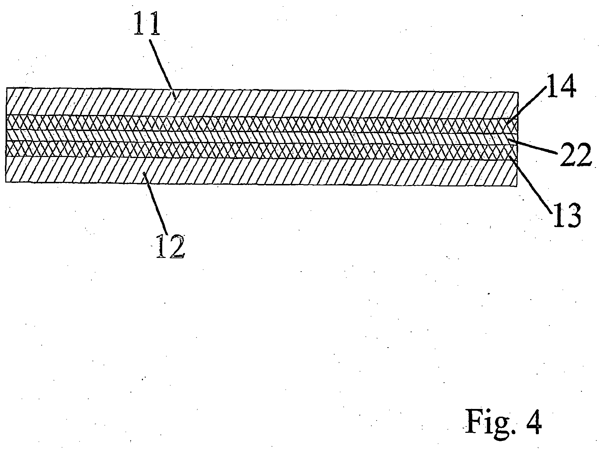

Zur weiteren Illustrationen zeigen die Figuren 4 bis 11 unterschiedliche Möglichkeiten der Mehrschichtlaminate und der Anordnung von Fenstern im weiteren Sinne.

Fig. 4 zeigt nochmals in schematischer Darstellung ein Mehrschichtlaminat 21 analog zu Fig. 2, wobei diesmal die unterschiedlichen Schichten schraffiert dargestellt sind.

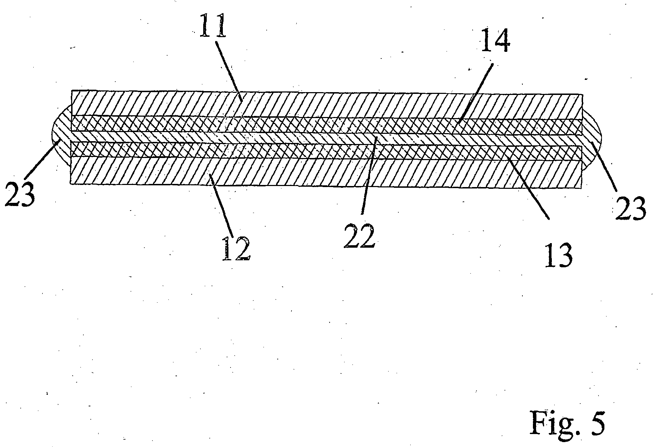

Ein besonders bevorzugtes Ausführungsbeispiel ist in Fig. 5 dargestellt. In diesem Fall befindet sich am Rand des Objekts eine Randverschmelzung 23. Eine derartige Randverschmelzung 23 erhöht die Einreissfestigkeit substanziell. Sie kann auf unterschiedlichen Wegen gehalten werden. Beispielsweise ist es möglich, die Kunststoffschicht 22 etwas grösser auszuschneiden als die beiden Papierlagen 11 respektive 12. Beim anschliessenden Laminieren verschmilzt der überstehende Kunststoffbereich mit dem Rand, wie dies in Fig. 5 dargestellt ist.

Alternativ ist es auch möglich, einen derartigen Träger in kontinuierlicher Weise herzustellen und anschliessend in entsprechende Stücke zu zerschneiden (z. B. in einzelne Banknoten, Glückwunschkarten etc.). Dieses Schneiden kann nun entweder unter Verwendung von erhöhter Temperatur (heisses Schneidwerkzeug), gegebenenfalls in Kombination mit der Anwendung von erhöhtem Druck, geschehen. Dies so, dass in den Randbereichen die Kunststoffschicht 22 etwas aus dem Bereich der Papierlagen 11 respektive 12 herausgepresst wird und eine Randverschmelzung 23 resultiert.

Weiterhin ist es möglich, nach dem Zuschneiden in einem separaten Prozess eine zusätzliche Lamination des Randes vorzunehmen, wobei wiederum Teile der Kunststoffschicht 22 zwischen den Papierlagen herausgepresst werden und zur Randverschmelzung 23 Anlass geben.

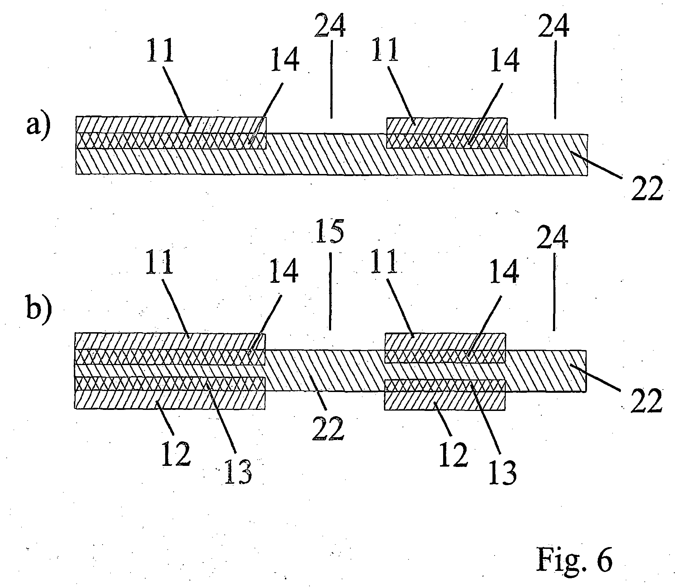

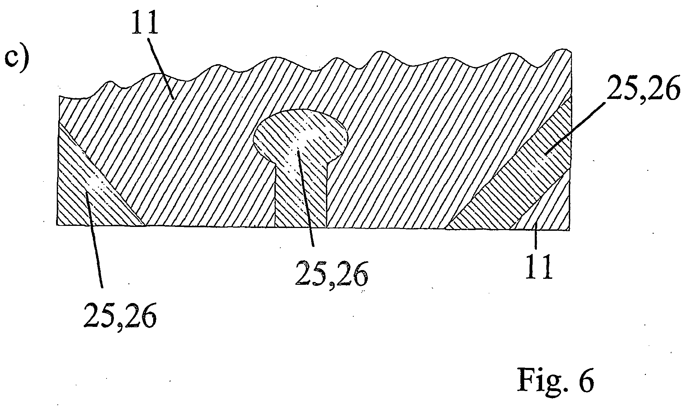

Fig. 6 zeigt, dass nicht nur vollständig von Papier der Papierlage 11 umschlossene Fenster möglich sind, sondern auch Randbereiche 24, 25, 26 mit freiliegendem Kunststoff. Die Formen können dabei unterschiedlichster Art sein, so beispielsweise ganze Streifen entlang des Substrats am Rand, bei welchen der Kunststoff entweder einseitig oder beidseitig freiliegt. Auch entsprechende Ecken oder beliebige in den Druckträger hineinragenden Formen (beispielsweise in Fig. 6c in der Mitte dargestellt) sind möglich.

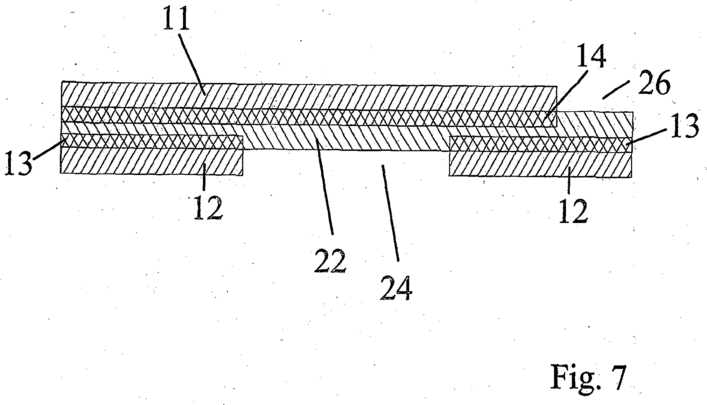

Fig. 7 dient der Illustration, dass auch Aussparungen 24,26 in nur einer der beiden Papierlagen 11 respektive 12 möglich sind. In diesen Bereichen liegt anschliessend die Kunststofffolie 22 frei, so ist entweder dann im Bereich 24 respektive 26 ein höherer Glanz sichtbar, es ist aber auch insbesondere möglich, in diesen Bereichen spezielle Sicherheitsmerkmale, welche in oder auf (z.B. opt. wirksame Gitter) der Kunststofffolie vorhanden sind, erscheinen zu lassen. Auch ist es möglich, beispielsweise bei der mittleren, nach unten offenen Aussparung 24 von Fig. 7 einen Druck oder ein anderes Sicherheitsmerkmal auf der Unterseite der Papierlage 11 im Bereich der Aussparung 24 anzuordnen. Ein derartiger Druck ist anschliessend durch die darüberliegende Kunststofffolie 22 vollständig geschützt.

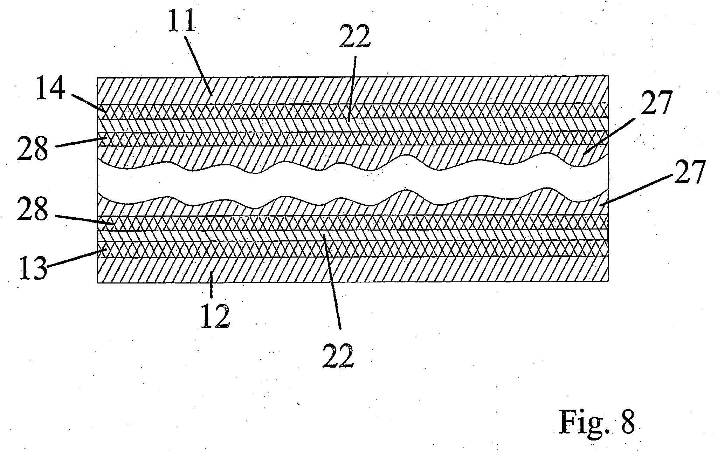

Fig. 8 dient der Illustration, dass nicht nur einfache Laminate mit 2 oder 3 Schichten denkbar sind, sondern dass ein derartiger Aufbau auch mehrschichtig mit beispielsweise 4 und mehr Lagen aufgebaut sein kann.

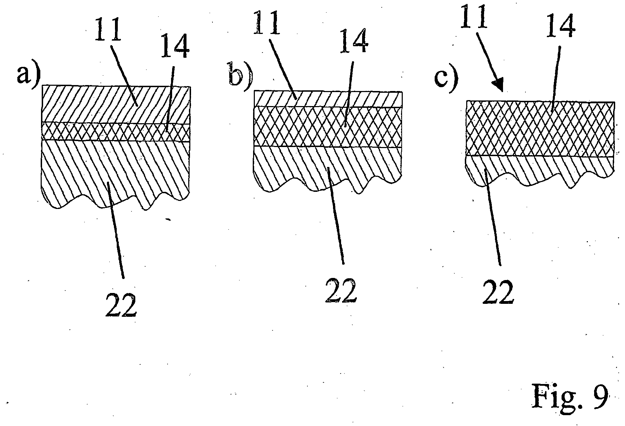

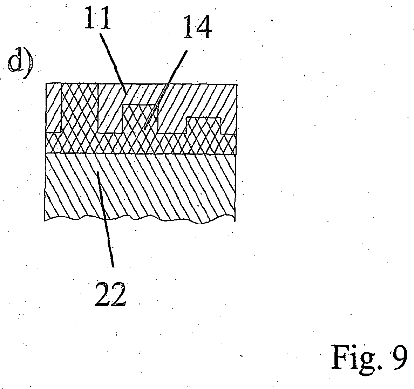

Fig. 9 zeigt, wie die Penetrationszonen unterschiedliche Tiefe aufweisen können. Es zeigt sich, dass typischerweise für eine konventionelle Bedruckbarkeit mindestens 10 Mikrometer des Papiers im wesentlichen nicht von Kunststoff durchdrungen sein sollten (d. h. der nicht doppelt schraffierte obere Bereich in den Figuren 9a respektive b sollte eine Dicke von wenigstens 10 Mikrometer aufweisen). Typischerweise beträgt die nicht von Kunststoff durchtränkte Dicke der Papierlagen weniger als 30 Mikrometer.

Eine weitere Besonderheit ist in Fig. 9d dargestellt. Durch eine lokal unterschiedliche Strukturierung der Penetrationszonen 14 (bereichsweise unterschiedliche Dicken) können auf der einen Seite unterschiedliche Opazitäten erhalten werden, es ist aber auch möglich, beispielsweise Zeichen für Sehbehinderte auf diese Weise zu ermöglichen (lokal unterschiedliche haptische Eigenschaften). Derartige lokale Penetrationszonen können beispielsweise durch regional unterschiedliches Heissstempeln (hot stamping) gehalten werden.

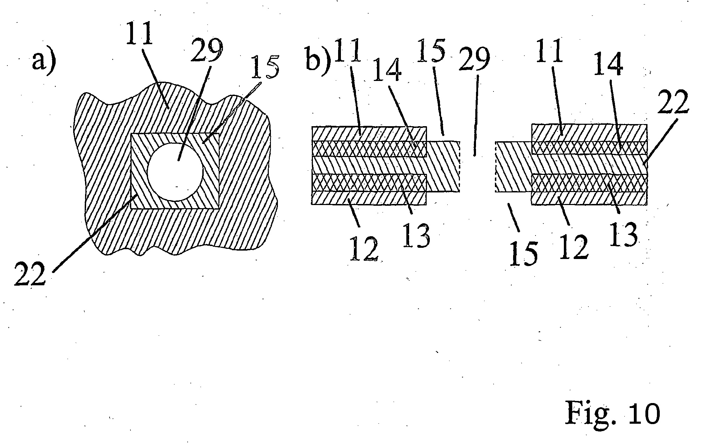

In Fig. 10 ist dargestellt, dass die Kunststoffschicht auch ihrerseits strukturiert sein kann. Möglich ist beispielsweise Embossing, Prägung, Gitter etc.. Hier ist insbesondere ein durchgängiges Loch 28 dargestellt, wie es beispielsweise bei einem gelochten Dokument mit vor Einreissen gesichertem Rand denkbar ist.

Zur Illustration des erfindungsgemässen Gegenstands wurden weitere Ausführungsbeispiele hergestellt und ausgemessen. Dabei wurden folgende Materialien verwendet:
Papier:
   ∘ Papier A: 80 g/m², recycliertes Xerox-Papier.
   ∘ Papier B: 50 g/m², landqart, Landquart, Schweiz.
   ∘ Papier C: 40 g/m², landqart, Landquart, Schweiz.
   ∘ Papier D: 20 g/m², Velina Molto RU, Orema Spa; Ormea.
   ∘ Papier E, Kimwipes®, Kimberly-Clark Corp.
Polymere:
   ∘ Grivory® G21 film, 30 µm Dicke (EMS Chemie, Schweiz),
   ∘ Grilamid® TR 90 LX Film 30 µm und 60 µm Dicke (EMS Chemie, Schweiz),
   ∘ Grilamid® ELY 60 (EMS Chemie, Schweiz),
   ∘ Isotaktisches Polypropylen Moplen® FLF20 (Basell Polyolefins Co. NV, Hoofdorp, NL), nicht erfindungsgemäss,
   ∘ Surlyn® K-based (E.I. DuPont De Nemours & Co., Wilmington, Delaware, USA), nicht erfindungsgemäss,
   ∘ Surlyn® Na-based (E.I. DuPont De Nemours & Co., Wilmington, Delaware, USA), nicht erfindungsgemäss,
   ∘ Nylon 11 (Polysciences, Inc. Warrington, PA, USA),
   ∘ Kynar® (Atochem North America, Inc., Philadelphia, PA, USA), nicht erfindungsgemäss,
   ∘ Poly(ethylen-co-methylacrylat) (Aldrich Chemical Co.. Inc. Miwaukee, WI, USA), nicht erfindungsgemäss.

Allgemein wurden dabei folgende Verfahren verwendet:
*Polymerfilme*: Die Filme wurden in einem Druckschmelzverfahren bei folgenden Temperaturen hergestellt:
   ∘ Grilamid® ELY 60: 180 °C,
   ∘ Isotaktisches Polypropylen: 200 °C, nicht erfindungsgemäss,
   ∘ Surlyn® K: 125 °C, nicht erfindungsgemäss,
   ∘ Surlyn® Na: 125 °C, nicht erfindungsgemäss,
   ∘ Nylon 11: 200 °C,
   ∘ Kynar® : 200 °C, nicht erfindungsgemäss,
   ∘ Poly(ethylen-co-methylacrylat): 125 °C, nicht erfindungsgemäss,.

Eine Carverpresse, Modell M 25T wurde dazu verwendet. Der angelegte Druck war 2 MPa während einer Zeit von 5 min, gefolgt von einem Abkühlen auf Raumtemperatur.

Es wurden Filme einer Dicke von ungefähr 80 µm erhalten.

*Papier*/*Polymer*/*Papier Laminate*: Schichtstrukturen von Lagen aus Papier/Polymer/Papier wurden zusammengestellt und in die geheizte Carverpresse zwischen zwei Kupferplatten gelegt, und zunächst während 30 sec ohne Anlegen von Druck belassen. Anschliessend wurden unterschiedliche Drücke während unterschiedlichen Zeiträumen angelegt. Die Temperatur während der Druckphase bei den unterschiedlichen Beispielen war im Bereich von 125 °C bis 250 °C. Anschliessend wurden die Beispiele auf Raumtemperatur abgekühlt.

*Charakterisierung*: Reissfestigkeit, Elastizitätsmodul, und Reissdehnung von ausgewählten Beispielen wurden ermittelt aus Spannungsdehnungsdiagrammen, welche durch Zugversuche bei Raumtemperatur (23°C) erhalten wurden. Dafür wurde ein Instron Zugmessgerät (Modell 4464) verwendet. Die Probenlänge zu Beginn war 12.5 mm, die Breite 2 mm und die Geschwindigkeit des Kreuzkopfes betrug 10 mm/min. Berstdruck (DIN ISO 2758), Bruchkraft, Doppelfalzzahl (Tappi T423), Reissfestigkeit (DIN EN 21974) und Steifigkeit (DIN 53121) wurden in Standardverfahren für einige ausgewählte der Proben gemessen, jeweils entsprechend der in Klammern angegebenen Norm.

### Beispiel 1

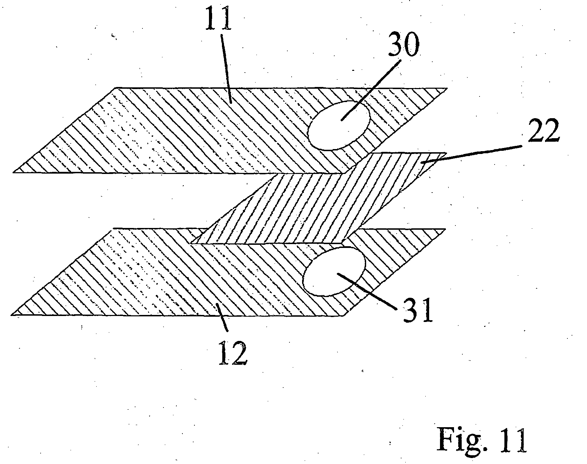

Proben von 20 mm x 100 mm von Papier A wurden ausgeschnitten, und ein Loch von 5 mm Durchmesser wurde jeweils an einem Ende von jedem Stück ausgestanzt. Anschliessend wurde ein Stück Polymerfilm von 20 mm x 40 mm x 0.1 mm ausgeschnitten und zwischen die beiden Papierlagen A gelegt, wobei die beiden Papierlagen derart übereinander gelegt wurden, dass die Löcher übereinander zu liegen kamen (vgl. Figur 11). Diese Schichtstruktur wurde zunächst zwischen zwei Polyamidfilme gelegt, um ein Kleben an den Kupferplatten der Presse zu verhindern. Anschliessend wurde die Kompression während 2 min bei 0.5 MPa für die verschiedenen Polymere bei folgenden Temperaturen durchgeführt: Grilamid® TR 90 LX: 155 °C und 200 °C, Surlyn® K: 125 °C, nicht erfindungsgemäss, Surlyn® Na: 125 °C, nicht erfindungsgemäss, Nylon 11: 155 °C und 200 °C, Pöly(ethylen-co-methylacrylat): 125 °C nicht erfindungsgemäss,.

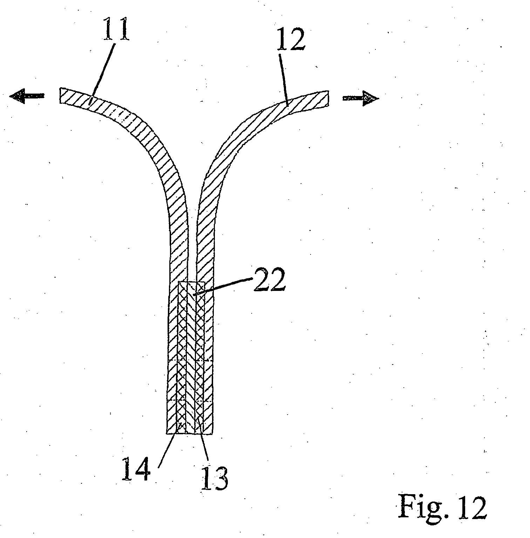

In allen Fällen wurde eine starke Bindung zwischen den Papierlagen und dem Polymer erhalten. Die zwei Bereiche des Papiers, welche nicht durch eine Polymerlage verbunden waren, wurden auseinandergerissen (vgl. Figur 12.) dies führte in jedem der Fälle zu einem Riss innerhalb der Papierlagen (Kohäsionsbruch im Papier) und nicht zu einer Delamination des Mehrschichtlaminates. Das Mehrschichtlaminat zeigte ein durchsichtiges Polymerfenster im Bereich der 2 Fenster der Papierlagen.

### Beispiel 2

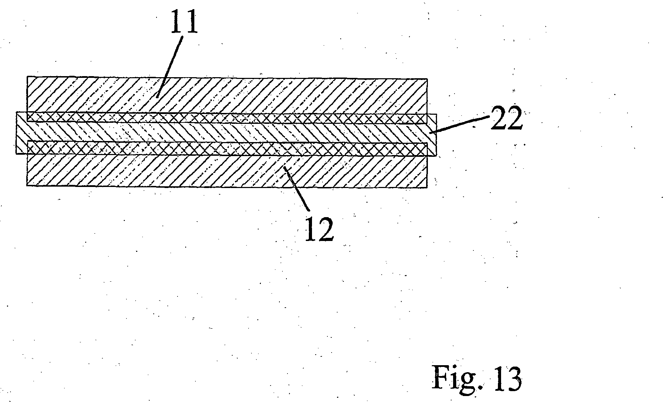

Beispiel 1 wurde wiederholt, aber es wurde ein grösseres Stück aus Grilamid® TR 90 LX von 24 mm x 44 mm x 0.1 mm ausgeschnitten. Wiederum wurde dieses Stück zwischen zwei Papierlagen aus Papier A gelegt, wobei nun jeweils ein kleiner Bereich des Polymer-Films über den Rand der Papierlagen hinausragte (vgl. Figur 13). Die Anwesenheit des daraus resultierenden Verschmelzungsbereiches 23 im Bereich des Randes erhöhte die Einreissfestigkeit (insbesondere die Auslösung des Risses) des entsprechenden Mehrschichtlaminates dramatisch wenn verglichen mit Beispiel 1.

### Beispiel 3

Beispiel 1 wurde wiederholt, aber an Stelle eines Fensters von 5 mm wurden Fenster mit einem Durchmesser von bis zu 16 mm hergestellt. In allen Fällen wurden zufriedenstellende Mehrschichtlaminate mit exzellenten mechanischen Eigenschaften erhalten.

### Beispiel 4

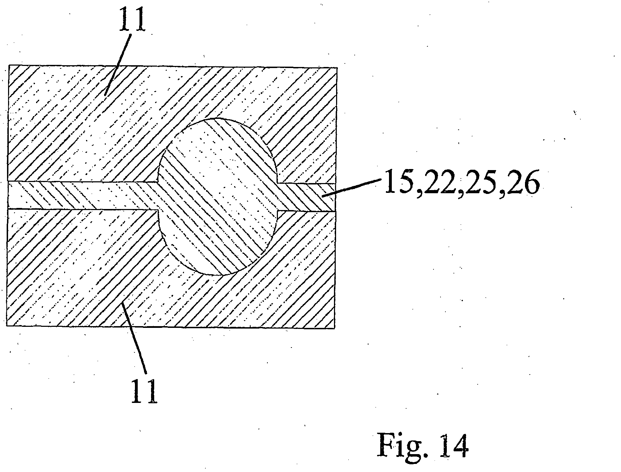

Beispiel 1 wurde wiederholt, aber an Stelle eines Fensters von 5 mm wurde eine Struktur hergestellt, bei welcher die 2 Papierlagen nicht kontinuierlich waren (vgl. Figur 14). Auch in diesen Fällen wurden zufriedenstellende Mehrschichtlaminate, mit guten mechanischen Eigenschaften erhalten.

### Beispiel 5

Papier/Polymer/Papier Laminate wurden hergestellt wie unter Beispiel 1 beschrieben, aber unter Verwendung von Papier B und Grilamid® TR 90 LX bei 200 °C. Anschliessend wurde das Mehrschichtlaminat in kochendes Wasser getaucht und während 30 Minuten unter heftigen Rühren gehalten. Als Referenz wurde ausserdem ein Blatt Papier (Papier B) den gleichen Bedingungen ausgesetzt. Dieses Referenz-Blatt zersetzte sich unter diesen Bedingungen vollständig, während das Mehrschichtlaminat intakt verblieb und keine Delamination zeigte, weder während der Behandlung noch danach.

### Beispiel 6

Papier C/Grivory® G21 30 µm Film/Papier D Laminate von 80 mm x 150 mm wurden hergestellt wie unter Beispiel 1 dargestellt, wobei bei 150 °C und 0.5 MPa während 1, 2 respektive 10 min laminiert wurde. Anschliessend wurde die Reissfestigkeit der Mehrschichtlaminate wie oben angegebenen gemessen. Im wesentlichen wurden keine Unterschiede zwischen den verschiedenen Mehrschichtlaminaten gefunden, und es wurden Reissfestigkeiten von ungefähr 11 km gemessen, was im wesentlichen dem Wert von Papier D entspricht und 50 % höher liegt als beim Polymerfilm allein und 30 % höher als bei Papier C. Die verschiedenen Mehrschichtlaminate zeigten unterschiedliche visuelle Erscheinung und unterschiedliche Oberflächenstruktur. So zeigten Mehrschichtlaminate, welche bei einer Laminationszeit von 10 min hergestellt worden waren, Polymer an der Oberfläche des Papiers, was anzeigt, dass das geschmolzene Polymer durch das Papier unter diesen Bedingungen mindestens teilweise hindurch diffundiert. Dies äusserte sich in einer glänzenden Erscheinung und in einer glatteren Oberfläche und in glatteren haptischen Eigenschaften.

### Beispiel 7

Laminate von 80 mm x 150 mm von Papier C/Grilamid® TR 90 LX 60 µm Film/Papier D (Laminat I) und von Papier C/Grilamid® ELY 60 /Papier D (Laminat II) wurden hergestellt wie unter Beispiel 1 beschrieben, wobei bei 180 °C und einem Druck von 0.75 MPa während einer Zeit von 1 min laminiert wurde. Eine Anzahl von verschiedenen Parametern wurde mit den oben beschriebenen Methoden ausgemessen. Zum Vergleich wurden die gleichen Eigenschaften bei einem Papier gemessen, wie es bei der Herstellung einer konventionellen 100sFr Banknote Anwendung findet (Referenz).

**Testkonditionen: 23 °C und 50% relative Feuchte (Prüfraumkonditionen)**

| **Methode** | **Eigenschaft** | **Unit** | **Laminat** I | **Laminat II** | **Referenz** |
|---|---|---|---|---|---|
| **DIN EN ISO 536** | Gewicht | **g/m²** | 109 | 105 | 91 |
| **DIN EN 20534** | Dicke | **µm** | 116 | 119 | 113 |
| **DIN EN 20534** | Spez.Volumen | **cm³/g** | 1.07 | 1.13 | 1.25 |
| **DIN ISO 2758** | Berstdruck | **kPa** | 415 | 300 | 360 |
| **DIN EN ISO 1924-2** | Bruchkraft-längs | **N** | 145 | 87 | 106 |
| **DIN EN ISO 1924-2** | Bruchkraft-quer | **N** | 73 | 60 | 63 |
| **Tappi T 423** | Falzzahl-längs | **-** | 21'531 | 35'589 | 2'162 |
| **Tappi T 423** | Falzzahl-quer | **-** | 22'138 | >50'000 | 2'088 |
| **DIN EN 21974** | Elmendorf (1 Blatt)-längs | **mN** | 846 | 1'133 | 1'093 |
| **DIN EN 21974** | Elmendorf (1 Blatt)-quer | **mN** | 942 | 974 | 1'416 |
| **DIN 53123** | Steifigkeit, Balken-längs | **Nmm** | 1.32 | 0.48 | 0.56 |
| **DIN 53123** | Steifigkeit, Balken-quer | **Nmm** | 0.54 | 0.59 | 0.25 |

Die Daten belegen, dass die Mehrschichtlaminate tatsächlich überragende Eigenschaften zeigen, und in mancher Hinsicht die Eigenschaften einer Banknote nach dem Stand der Technik übertreffen. So beispielsweise in Bezug auf den Berstdruck, die Bruchkraft und die Steifigkeit. Besonders bemerkenswert ist die Erhöhung respektive Verbesserung der Falzzahl-Werte für das Mehrschichtlaminat.

### Beispiel 8

Beispiel 7 wurde wiederholt, und Mehrschichtlaminate aus Papier C/Grilamid® TR 90 LX 60 µm Film/Papier D wurden hergestellt. Sie hatten ein transparentes Fenster einer Grösse von 10 mm x 10 mm. Die Doppefalzzahl wurde in einem Bereich bestimmt, in welchem das Fenster angeordnet war. Dazu wurde so vorgegangen, dass ein Teststreifen so zugeschnitten wurde (respektive derart positioniert wurde), dass die Falzung im Fenster und im umgebenden Papier erfolgte (entsprechend Tappi T 423). Der resultierende Wert der Doppelfalzzahl betrug 7510.

### Beispiel 9

Beispiel 8 wurde wiederholt, und Mehrschichtlaminate aus Papier C/Grilamid® TR 90 LX 60 µm Film/Papier D wurden hergestellt. Sie hatten ein transparentes Fenster einer Grösse von 10 mm x 10 mm. Die Laminate wurden anschliessend einem Standard-Knittertest unterzogen, wobei ein IGT Crumplingtester 1, 4 resp. 8 mal verwendet wurde. Die Mehrschichtlaminate überstanden diese Tests im wesentlichen unverändert, es wurde keine Delamination beobachtet, auch nicht im Bereich der Fenster. Ausserdem blieben die Fenster transparent.

### Beispiel 10

Beispiel 9 wurde wiederholt, wobei diesmal Papier C ein Wasserzeichen enthielt, während Papier D kein Wasserzeichen aufwies. Das derart hergestellte Mehrschichtlaminat zeigte in erstaunlicher Klarheit und Erkenntlichkeit das Wasserzeichen in Papier C. Erstaunlicherweise erschien das Wasserzeichen im derart hergestellten Mehrschichtlaminat schärfer als im Papier C im unlaminierten Zustand. Dies insbesondere bei Betrachtung unter Reflexion.

### Beispiel 11

Beispiel 9 wurde wiederholt. Die Mehrschichtlaminate wurden in diesen Versuch einem heissen Waschmaschinentest unterzogen, wobei dieser Test bei einer Temperatur von 95 °C während einer Zeit von 1 Stunde in 4 1 Wasser durchgeführt wurden, und wobei diesem Wasser 50 ml eines Standardwaschmittels(Omo) zugefügt wurde. Das Mehrschichtlaminat überstand diesen Test im wesentlichen unverändert, es wurde keine Delamination beobachtet, auch nicht im Bereich des Fensters. Das Fenster überstand den Test, ohne dabei trüb zu werden.

### Beispiel 12

Wässrige Farbstofflösungen einer Konzentration von 0.25 mg/g of Kongorot (Aldrich Chemicals Co., Milwaukee) and Chicago Sky Blue (Sigma Chemical Co., St. Louis) wurden hergestellt, indem jeweils 12.5 mg des Farbstoffs in 50 ml destilliertem Wasser gelöst wurden. 10g Poly(vinylalkohol) (PVA, 98-99% hydrolysiert, gewichtsgemitteltes Molekulargewicht von 10⁵ g/mol, Aldrich Chemicals Co., Milwaukee) wurde während 2 h in 490 ml kochendem destilliertem Wasser gerührt, wobei eine 2% w/w PVA Lösung erhalten wurde. Man liess die Lösung anschliessend auf Raumtemperatur abkühlen. Drei PVA/Farbstoff Blendfilme wurden hergestellt, indem eine bestimmte Menge der entsprechenden Farbstofflösung mit 10 g der 2% w/w PVA Lösung gemischt wurden, und in einem Solution-casting-Prozess in Petrischalen eines Durchmessers von 9 cm bei Raumtemperatur das Wasser verdampft wurde.

Die so hergestellten Filme hatten folgende Zusammensetzungen:
(A) 0.2% w/w Congo Red (bezogen auf Feststoffgehalt), hergestellt durch die Mischung von 1.6 g Kongorot-Farbstofflösung mit 10 g PVA Lösung,
(B) 0.4% w/w Chicago Sky Blue (bezogen auf Feststoffgehalt), hergestellt durch die Mischung von 3.2 g Chicago Sky Blue Farbstofflösung mit 10 g PVA Lösung,
(C) 0.2% w/w Kongorot und 0.4% w/w Chicago Sky Blue (bezogen auf Feststoffgehalt), hergestellt durch eine Mischung von 1.6 g Kongorot Farbstofflösung und 3.2 g Chicago Sky Blue Farbstofflösung mit 10 g PVA Lösung.

Die getrockneten PVA/Farbstoff Blendfilme wurden in Streifen von 2 cm Breite geschnitten, und anschliessend uniaxial gereckt auf einem heissen Schuh (Wagner & Munz, Modell WME) mit einem Zugverhältnis (Verhältnis der Länge nach dem Recken zur Länge vor dem Recken) von 6 bei einer Temperatur von 200 °C. Die erhaltenen polarisierenden Filter zeigten dichroische Verhältnisse von mehr als 50 (bestimmt bei den Absorptionsmaxima im Spektrum) und hatten eine Dicke von typischerweise 15 µ m.

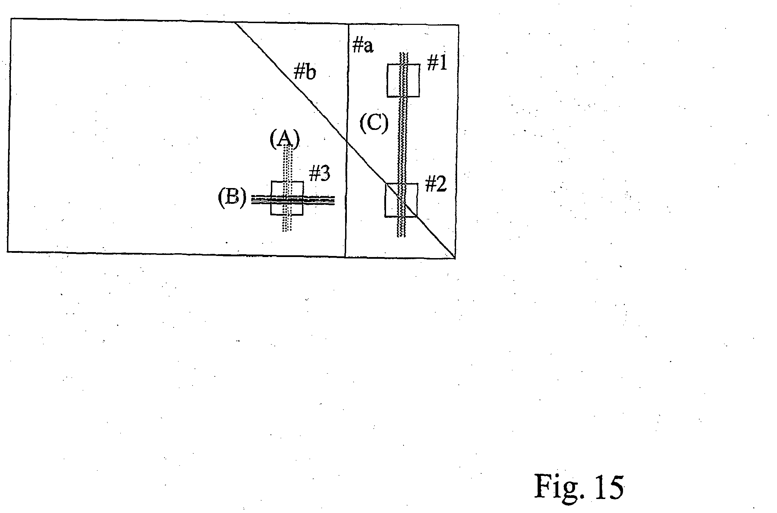

Mehrschichtlaminate einer Grösse von 80 mm x 150 mm bestehend aus Papier C und D, Grivory® G21 Film eine Dicke von 30 µm wurden unter Verwendung der oben beschriebenen dichroischen Filter hergestellt (vergleiche Fig. 15, wobei (A), (B), und (C) sich auf Blendfilme der obigen Zusammensetzungen beziehen). Dabei wurde folgende Schichtstruktur aufgebaut:
1. eine erste Schicht aus Papier C mit 3 Löchern einer Grösse von 10 mm x 10 mm;
2. eine erste Schicht aus Polymerfilm
3. ein Streifen aus dem dichroischen Filter (C), welcher beide Löcher #1 und #2 überdeckt; ein Streifen aus dem dichroischen Filter (A), welcher das Loch #3 derart überdeckt, dass seine Zugrichtung parallel zur Zugrichtung des Streifens (A) ausgerichtet ist;
4. ein Streifen aus dem dichroischen Filter (B) auf der Schicht aus dem dichroischen Filter (A), wobei ebenfalls das Loch #3 überdeckt wurde, und der Streifen (B) derart ausgerichtet wurde, dass die Zugrichtung des Streifens (B) senkrecht zur Zugrichtung des Streifens (C) ausgerichtet war;
5. eine zweite Schicht aus Polymerfilm
6. eine zweite Schicht von Papier D mit Löchern an den entsprechenden Stellen für eine Durchsicht durch das gesamte Mehrschichtlaminat.

Der Stapel wurde bei einer Temperatur von den 120 °C während einer Zeit von 1 min und bei einem Druck von 0.5 MPa laminiert. So wurde ein Mehrschichtlaminat mit drei Fenstern #1, #2 und #3 erhalten, welche alle eine lavendelgraue Farbe zeigten. Bei Betrachtung von Fenster #3 durch das Fenster #1 (indem das Mehrschichtlaminat entlang der Linie #a gefaltet wird), zeigt das Fenster #3 eine blaue Farbe. Im Gegensatz dazu beobachtet man bei Betrachtung von Fenster #3 durch Fenster #2 (indem das Mehrschichtlaminat entlang der Linie #b gefaltet wird), eine rote Färbung von Fenster #3. So kann in einfacher Weise ein selbst-verifizierendes Objekt hergestellt werden.

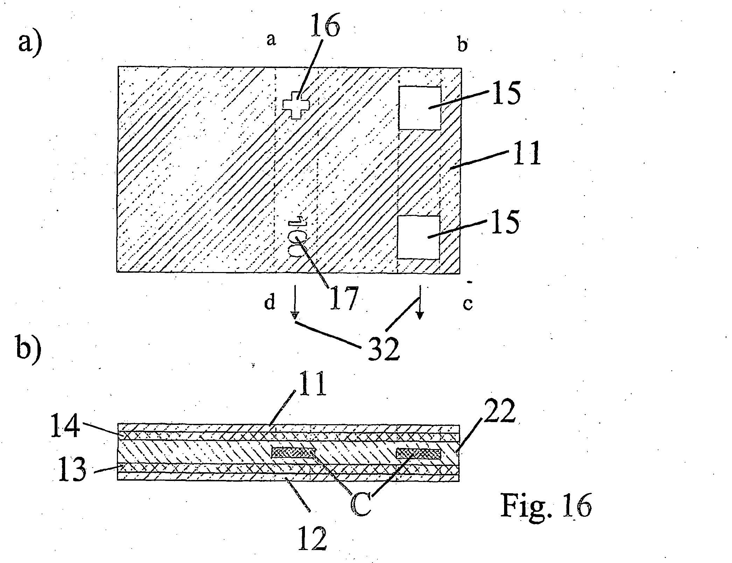

In ähnlicher Weise kann ein Objekt gemäss Fig. 16 hergestellt werden. Hier sind zwei polarisierende Streifen C in das Laminat eingebaut, wobei der Schichtaufbau analog zum obigen Beispiel erhalten wurde.

Wird nun das Objekt gefaltet, sodass die Punkte a und c auf die Punkte b respektive d gelegt werden, so erscheinen das Kreuz sowie die Zahl intransparentem leichtem grau. Wird andererseits Punkt a auf den Punkt d gefaltet, so resultiert infolge der gekreuzten Polarisationsrichtungen ein schwarzes Fenster. Das Gleiche gilt für ein Falten von Punkt c auf Punkt b.

### BEZUGSZEICHENLISTE

- 1: Sicherheitspapier
- 2: obere Papierlage
- 3: untere Papierlage
- 4: Kunststoffschicht
- 5: Adhäsiv, Leim
- 10: Mehrschichtlaminat, z.B. Sicherheitspapier
- 11: obere Papierlage
- 12: untere Papierlage
- 13: untere Penetrationszone
- 14: obere Penetrationszone
- 15: Fenster (rechteckig)
- 16: Fenster (Form)
- 17: Fenster (Zahl)
- 18: Wasserzeichen
- 19: Sicherheitsstreifen
- 20: Oberseite
- 21: Unterseite
- 22: Kunststoffschicht ("side exposure")
- 23: Randverschmelzung
- 24: Aussparung
- 25: Fenster, angrenzend an Rand des Druckträgers
- 26: Aussparung, angrenzend an Rand des Druckträgers
- 27: weitere Papierlage(n)
- 28: weitere Penetrationszone(n)
- 29: Loch in 22
- 30: Loch in 11
- 31: Loch in 12
- 32: Polarisationsrichtung

## Patentansprüche

1. Mehrschichtlaminat, insbesondere als Druckträger z.B. als Sicherheitspapier, umfassend:
eine einzelne Kunststoffschicht (22) aus einem einzigen Material mit einer Ober-(20) und einer Unterseite (21), wobei es sich bei der Kunststoffschicht (22) um ein thermoplastisches polymeres Material handelt,
wenigstens eine mit der Kunststoffschicht (22) verbundene obere Papierlage (11) auf der Oberseite (20) der Kunststoffschicht (22);
wobei die Verbindung zwischen der oberen Papierlage (11) und der Kunststoffschicht (22) im wesentlichen ohne zusätzlichen Haftvermittler durch eine Penetrationszone (14), in welchen Teile der Kunststoffschicht (22) mit der Masse des Faserverbunds der Papierlage (11) verschmolzen sind, gewährleistet ist, und wobei sich die Penetrationszone (13,14) im wesentlichen nicht bis zu der der Kunststoffschicht (22) abgewandten Oberfläche der Papierlage (11) erstreckt;
wenigstens eine mit der Kunststoffschicht (22) verbundene untere Papierlage (12) auf der Unterseite (21) der Kunststoffschicht (22),
wobei die Verbindung zwischen der unteren Papierlage (12) und der Kunststoffschicht (22) im wesentlichen ohne zusätzlichen Haftvermittler durch eine Penetrationszone (13), in welchen Teile der Kunststoffschicht (22) mit der Masse des Faserverbunds der Papierlage (12) verschmolzen sind, gewährleistet ist, und wobei sich die Penetrationszone (13) im wesentlichen nicht bis zur der Kunststoffschicht (22) abgewandten Oberfläche der Papierlage (12) erstreckt,
und wobei wenigstens eine der Papierlagen (11, 12) ein Sicherheitsmerkmal aufweist und/oder die Kunststoffschicht (22) wenigstens ein Sicherheitsmerkmal in Form eines elektrischen, elektronischen, magnetischen, oder optischen Informationsmittels oder einer Kombination derartiger Informationsmittel aufweist,
**dadurch gekennzeichnet, dass**
es sich beim polymeren Material um ein transparentes, teil-amorphes oder vollamorphes Polyamid handelt, dass
die Papierlagen (11, 12) ein Flächengewicht im Bereich von 20 bis 50 g/m² aufweisen, die Kunststoffschicht (22) eine Dicke im Bereich von 20 bis 50 µm aufweist, und das resultierende Mehrschichtlaminat respektive der Druckträger insgesamt ein Flächengewicht von 80 bis 150 g/m², und dass wenigstens eine der Papierlagen (11, 12) eine durchgängige Aussparung (15-17) aufweist, sodass die Kunststoffschicht (22) in diesem Bereich freiliegt.

2. Mehrschichtlaminat nach Anspruch 1, **dadurch gekennzeichnet, dass** es sich bei wenigstens einer der Papierlagen (11,12) um Papier handelt, welches in einer Rundsiebmaschine oder in einer Langsiebmaschine hergestellt wurde, vorzugsweise unter Verwendung von cellulosischem Fasermaterial wie Baumwolle, und/oder Flachs, und/oder Leinen als Hauptfaserrohstoff.

3. Mehrschichtlaminat nach einem der vorhergehenden Ansprüche, **dadurch gekennzeichnet, dass** das polymere Material eine Glasübergangstemperatur im Bereich, von 50 bis 250 °C, bevorzugt im Bereich von 75 bis 225 °C, oder im Bereich von 100 bis 200 °C, insbesondere bevorzugt von 120 bis 180 °C aufweist, oder eine Fliesstemperatur, wenn die Glasübergangstemperatur unterhalb der Raumtemperatur liegt, im Bereich von 50 bis 250 °C, bevorzugt im Bereich von 75 bis 225 °C, oder im Bereich von 100 bis 200 °C, insbesondere bevorzugt von 120 bis 180 °C aufweist.

4. Mehrschichtlaminat nach Anspruch 1, **dadurch gekennzeichnet, dass** es sich beim Polyamid um ein Polyamid auf der Basis aliphatischer und cycloaliphatischer Bausteine, ggf. mit aromatischen Anteilen handelt.

5. Mehrschichtlaminat nach einem der vorhergehenden Ansprüche, **dadurch gekennzeichnet, dass** das wenigstens eine Sicherheitsmerkmal der Kunststoffschicht (22) ausgewählt ist aus: Aufdruck, fluoreszierender Bereich, polarisierender Bereich, polarisiert fluoreszierender Bereich, polarisiert absorbierender Bereich, Hologramm, photochrome Bereiche, Mikroprägung, Mikroperforation, Chip, elektrisch leitender Bereich, magnetischer Bereich.

6. Mehrschichtlaminat nach einem der vorhergehenden Ansprüche, **dadurch gekennzeichnet, dass** das Sicherheitsmerkmal der wenigstens einen Papierlage (11, 12) ausgewählt ist aus: Wasserzeichen, insbesondere Graustufen-Wasserzeichen (18); Sicherheitsfaden (19); OVD; Melierfasern; Sicherheitspigmente; irisierende Farbapplikationen, Chip, Magnetstreifen.

7. Mehrschichtlaminat nach einem der vorhergehenden Ansprüche, **dadurch gekennzeichnet, dass** beide Papierlagen (11, 12) eine Aussparung in wenigstens teilweise überlappender Weise unter Bildung eines Fensters (15-17), insbesondere bevorzugt mit unregelmässigem respektive gleitenden Rand, aufweisen.

8. Mehrschichtlaminat nach Anspruch 7, **dadurch gekennzeichnet, dass** wenigstens im Bereich des Fensters (15-17) die Kunststofffolie wenigstens ein Sicherheitsmerkmal aufweist.

9. Mehrschichtlaminat nach Anspruch 8, **dadurch gekennzeichnet, dass** unter Zuhilfenahme wenigstens eines Fensters, insbesondere mit polarisierenden Eigenschaften, wenigstens ein weiteres Sicherheitsmerkmal, insbesondere mit polarisierenden Eigenschaften, überprüft werden kann.

10. Mehrschichtlaminat nach einem der Ansprüche 7 bis 9, **dadurch gekennzeichnet, dass** im Bereich der Aussparung (15-17) bei der Herstellung eine weitere Kunststofflage mit der gleichen Kontur wie das Fenster in das Fenster hingelegt wird.

11. Mehrschichtlaminat nach einem der vorhergehenden Ansprüche, in Form eines Druckträgers mit einer Doppelfalzzahl, welche mehr als doppelt so gross ist, wie die Doppelfalzzahl einer einzelnen Papierlage (11, 12), wobei die Doppelfalzzahl bevorzugt mehr als 5 mal, insbesondere bevorzugt mehr als 10 mal oder sogar mehr als 100 mal so gross ist, wie die Doppelfalzzahl einer einzelnen Papierlage (11, 12).

12. Mehrschichtlaminat nach einem der vorhergehenden Ansprüche, **dadurch gekennzeichnet, dass** wenigstens eine mit der Kunststoffschicht (22) verbundene untere Papierlage (12) auf der Unterseite (21) der Kunststoffschicht (22) angeordnet ist, und dass die Verbindung zwischen der unteren Papierlage (12) und der Kunststoffschicht (22) im wesentlichen ohne zusätzlichen Haftvermittler durch eine Penetrationszone (13), in welchen Teile der Kunststoffschicht (22) mit der Masse des Faserverbunds der Papierlage (12) verschmolzen sind, gewährleistet ist, wobei sich die Perietrationszone (13) im wesentlichen nicht bis zur der Kunststoffschicht (22) abgewandten Oberflächen der Papierlage (12) erstreckt, und dass das Mehrschichtlaminat wenigstens eine Randkante aufweist, welche wenigstens abschnittsweise über eine Randverschmelzung (23) verfügt, welche die seitliche Randkante wenigstens einer der Papierlagen (11, 12) wenigstens teilweise abdeckt, wobei die Randverschmelzung (23) bevorzugt aus dem Material der Kunststoffschicht (22) gebildet ist.

13. Mehrschichtlaminat nach einem der vorhergehenden Ansprüche, **dadurch gekennzeichnet, dass** die Penetrationstiefe (13, 14) derart ausgebildet ist, dass im wesentlichen wenigstens 10 µm der der Kunststoffschicht (22) abgewandten Oberfläche wenigstens einer der Papierlagen (11, 12) im wesentlichen nicht von Kunststoff durchdrungen sind.

14. Mehrschichtlaminat nach Anspruch 13, **dadurch gekennzeichnet, dass** die Penetrationstiefe (13, 14) derart ausgebildet ist, dass im wesentlichen wenigstens 15 µm, bevorzugt im wesentlichen wenigstens 20 µm, insbesondere bevorzugt, im wesentlichen wenigstens 30 µm, der der Kunststoffschicht (22) abgewandten Oberfläche wenigstens einer der Papierlagen (11, 12) im wesentlichen nicht von Kunststoff durchdrungen sind.

15. Mehrschichtlaminat nach einem der vorhergehenden Ansprüche, **dadurch gekennzeichnet, dass** die Penetrationstiefe (13, 14) eine Dicke von wenigstens 10 µm, bevorzugt von wenigstens 15 µm, insbesondere bevorzugt von wenigstens 30 µm aufweist.

16. Mehrschichtlaminat nach einem der vorhergehenden Ansprüche, **dadurch gekennzeichnet, dass** die Penetrationstiefe (13, 14) bereichsweise eine unterschiedliche Dicke aufweist.

17. Mehrschichtlaminat nach einem der vorhergehenden Ansprüche, **dadurch gekennzeichnet, dass** die Kunststoffschicht (22) polarisierend und/oder fluoreszierend und/oder phosphoreszierend und/oder optisch brechend ausgebildet ist, wobei insbesondere bevorzugt eine polarisierte Absorption und/oder eine polarisierte Emission vorhanden ist.

18. Druckträger in Form von Banknote, Check, Ticket, Zertifikat, Aktiendokument, Obligationendokument, Urkunde, Ausweisdokument, Zutrittsdokument hergestellt ausgehend von einem Mehrschichtlaminat nach einem der vorhergehenden Ansprüche.

19. Verfahren zur Herstellung eines Mehrschichtlaminates nach einem der Ansprüche 1 bis 18, **dadurch gekennzeichnet, dass** in einem Laminator die Papierlagen (11, 12) mit der Kunststoffschicht (22) wenigstens teilweise verschmolzen werden, wobei eine Temperatur von im Bereich von 50 bis 250 °C, bevorzugt im Bereich von 75 bis 225 °C, oder im Bereich von 100 bis 200 °C, insbesondere bevorzugt von 140 bis 180 °C verwendet wird, und ein Druck von im Bereich von 10 Pa bis 10 MPa, bevorzugt von 1kPa bis 10 MPa, oder von 1kPa bis 5 MPa, insbesondere bevorzugt von im Bereich von 0.5 MPa bis 2 MPa verwendet wird.

20. Verfahren nach Anspruch 19, **dadurch gekennzeichnet, dass** zunächst von Raumtemperatur auf die Zieltemperatur erhöht wird und anschliessend vom Normaldruck auf den Zieldruck erhöht wird.

21. Verfahren nach einem der Ansprüche 19 oder 20, **dadurch gekennzeichnet, dass** es sich um einen kontinuierlichen Prozess handelt, bei welchem die einzelnen Träger (11, 12, 22) von Rollen zugeführt werden, und dass es sich beim Laminator um einen Rollenlaminator handelt, wobei die Kunststoffschicht (22) mittig zugeführt wird und die beiden Papierlagen (11, 12) von oben respektive von unten, und wobei insbesondere bevorzugt ein Liniendruck im Bereich von 1 bis 500 N/mm angewendet wird.

22. Verfahren nach einem der Ansprüche 19 bis 21, **dadurch gekennzeichnet, dass** als Kunststoffschicht (22) wenigstens in Bereichen eine gereckte Folie mit polarisierenden Eigenschaften verwendet wird.

23. Verfahren nach einem der Ansprüche 19 bis 22, **dadurch gekennzeichnet, dass** das Mehrschichtlaminat derart zugeschnitten und/oder nachbehandelt insbesondere lokal nachlaminiert wird, dass sich im Bereich wenigstens einer Randkante eine Randverschmelzung (23) ausgebildet.

24. Verfahren nach Anspruch 23, **dadurch gekennzeichnet, dass** die Randverschmelzung (23) erzeugt wird, indem beim Schneiden eine erhöhte Temperatur und/oder ein erhöhter Druck im Schnittbereich angelegt wird.

25. Verwendung eines Mehrschichtlaminates respektive eines Druckträgers nach einem der Ansprüche 1 bis 18 als Abdeckmaterial, Verpackungsmaterial, Kartenmaterial, Sicherheitspapier, insbesondere als Banknote, Check, Ticket, Zertifikat, Aktiendokument, Obligationendokument, Urkunden, Ausweisdokumente, Zutrittsdökumente.

## Claims

1. A multiple layer laminate, in particular as a print substrate, for example as security paper, comprising:
one single plastic layer (22) made of a single material having a top side (20) and a bottom side (21), wherein the plastic layer (22) is a thermoplastic polymeric material;
at least one upper paper layer (11) bonded to the plastic layer (22) and present on the top side (20) of the plastic layer (22);
wherein the bond between the upper paper layer (11) and the plastic layer (22) is ensured substantially without additional adhesion promoter by a penetration zone (14) in which parts of the plastic layer (22) are fused to the material of the fiber composite of the paper layer (11), the penetration zones (13, 14) substantially not extending up to the surfaces of the paper layer which face away from the plastic layer (22);
at least one lower paper layer (12) bonded to the plastic layer (22) is arranged on the bottom side (21) of the plastic layer (22);
wherein the bond between the lower paper layer (12) and the plastic layer (22) is ensured substantially without additional adhesion promoter by a penetration zone (13) in which parts of the plastic layer (22) are fused to the mass of the fiber composite of the paper layer (12), the penetration zone (13) substantially not extending up to the surfaces of the paper layer (12) which face away from the plastic layer (22)
and wherein at least one of the paper layers (11, 12) has a security feature and/or the plastic layer (22) has at least one security feature in the form of an electrical, electronic, magnetic or optical information medium or of a combination of such information media
**characterized in that**
the polymeric material is a transparent, partly amorphous or completely amorphous polyamide, that
the paper layers (11, 12) have a basis weight in the range from 20 to 50 g/m² and **in that** the plastic layer (22) has a thickness in the range from 20 to 50 µm, and the resulting multiple layer laminate or the print substrate, respectively, as a whole has a basis weight in the range from 80 to 150 g/m², and that
at least one of the paper layers (11, 12) has a cut-out (15-17) right through so that the plastic layer (22) is exposed in this region.

2. The multiple layer laminate according to one of the preceding claims, **characterized in that** at least one of the paper layers (11, 12) is paper which was produced in a cylinder paper machine or in a Fourdrinier paper machine, preferably with the use of cellulosic fiber material, such as cotton, and/or flax, and/or linen as the main fiber raw material.

3. The multiple layer laminate according to one of the preceding claims, **characterized in that** the polymeric material has a glass transition temperature in the range from 50 to 250 °C, preferably in the range from 75 to 225°C, or in the range from 100 to 200 °C, particularly preferably from 120 to 180 °C, or a flow temperature, if the glass transition temperature is below room temperature, in the range from 50 to 250 °C, preferably in the range from 75 to 225 °C, or in the range from 100 to 200 °C, particularly preferably from 120 to 180 °C.

4. The multiple layer laminate according to claim 4, **characterized in that** the polymeric material is a polyamide based on aliphatic and cycloaliphatic building blocks, optionally with aromatic moieties.

5. The multiple layer laminate according to one of the preceding claims, **characterized in that** the at least one security feature of the plastic layer (22) is selected from: imprint, fluorescent region, polarizing region, polarized fluorescent region, polarized absorbent region, hologram, photochromic regions, microembossing, microperforation, chip, electrically conductive region, magnetic region.

6. The multiple layer laminate according to one of the preceding claims, **characterized in that** the security feature of the at least one paper layer (11, 12) is selected from: watermark, in particular gray step watermark (18); security filament (19); OVD; mixed fibers; security pigments; iridescent color applications, chip, magnetic stripes.

7. The multiple layer laminate according to one of the preceding claims, **characterized in that**, both paper layers (11, 12) have a cut-out in an at least partly overlapping manner with formation of a window (15-17), particularly preferably having an irregular or fluid edge, respectively.

8. The multiple layer laminate according to claim 7, **characterized in that** the plastic film has at least one security feature at least in the region of the window (15-17).

9. The multiple layer laminate according to claim 8, **characterized in that** at least one further security feature, in particular having polarizing properties, can be checked with the aid of at least one window, in particular having polarizing properties.

10. The multiple layer laminate according to one of claims 7 to 9, **characterized in that** a further plastic layer having the same contour as the window is inserted into the window in the region of the cut-out (15-17) during production.

11. The multiple layer laminate according to one of the preceding claims, in particular in the form of a print substrate having a number of double folds which is more than twice as great as the number of double folds of an individual paper layer (11, 12), the number of double folds preferably being more than 5 times, particularly preferably more than 10 times or even more than 100 times as great as the number of double folds of an individual paper layer (11, 12).

12. The multiple layer laminate according to one of the preceding claims, **characterized in that** at least one lower paper layer (12) bonded to the plastic layer (22) is arranged on the bottom side (21) of the plastic layer (22), and **in that** the bond between the lower paper layer (12) and the plastic layer (22) is ensured substantially without additional adhesion promoter by a penetration zone (13) in which parts of the plastic layer (22) are fused to the material of the fiber composite of the paper layer (12), the penetration zone (13) substantially not extending up to the surfaces of the paper layer (12) which face away from the plastic layer (22), and **in that** the multiple layer laminate has at least one edge which has, at least in sections, an edge fusion (23) which at least partly covers the lateral edge of at least one of the paper layers (11, 12), the edge fusion (23) preferably being formed from the material of the plastic layer (22).

13. The multiple layer laminate according to one of the preceding claims, **characterized in that** the penetration depth (13, 14) is formed so that substantially at least 10 µm of that surface of at least one of the paper layers (11, 12) which faces away from the plastic layer (22) are substantially not penetrated by plastic.

14. The multiple layer laminate according to claim 15, **characterized in that** the penetration depth (13, 14) is formed so that substantially at least 15 µm, preferably substantially at least 20 µm, particularly preferably substantially at least 30 µm, of that surface of at least one of the paper layers (11, 12) which faces away from the plastic layer (22) are substantially not penetrated by plastic.

15. The multiple layer laminate according to one of the preceding claims, **characterized in that** the penetration depth (13, 14) has a thickness of at least 10 µm, preferably of at least 15 µm, particularly preferably of at least 30 µm.

16. The multiple layer laminate according to one of the preceding claims, **characterized in that** the penetration depth (13, 14) has a different thickness in some regions.

17. The multiple layer laminate according to one of the preceding claims, **characterized in that** the plastic layer (22) is formed so as to be polarizing and/or fluorescent and/or phosphorescent and/or optically refractive, wherein particularly preferably a polarized absorption and/or a polarized emission is present.

18. A print substrate, packaging material, covering material, security paper, in particular bank note, check, ticket, certificate, share document, bond document, document, identity document or admission document produced starting from a multiple layer laminate according to one of the preceding claims.

19. A process for the production of a multiple layer laminate according to one of claims 1 to 18, **characterized in that** the paper layers (11, 12) are at least partly fused to the plastic layer (22) in a laminator, a temperature in the range from 50 to 250 °C, preferably in the range from 75 to 225 °C, or in the range from 100 to 200 °C, particularly preferably from 140 to 180 °C, being used, and a pressure in the range from 10 Pa to 10 MPa, preferably from 1 kPa to 10 MPa, or from 1 kPa to 5 MPa, particularly preferably in the range from 0.5 MPa to 2 MPa, being used.

20. The process according to claim 19, **characterized in that** the temperature is initially increased from room temperature to the target temperature and then the pressure is increased from atmospheric pressure to the target pressure.

21. The process as according to one of claims 19 or 20, **characterized in that** it is a continuous process in which the individual substrates (11, 12, 22) are fed by rollers, and **in that** the laminator is a roller laminator, the plastic layer (22) being fed centrally and the two paper layers (11, 12) from the top and the bottom, and particularly preferably a nip pressure in the range from 1 to 500 N/mm being used.

22. The process according to one of claims 19 to 21, **characterized in that** a stretched film having polarizing properties is used as plastic layer (22), at least in regions.

23. The process according to one of claims 19 to 22, **characterized in that** the multiple layer laminate is cut to size and/or aftertreated, in particular subsequently locally laminated, in such a way that an edge fusion (23) is formed in the region of at least one edge.

24. The process according to claim 23, **characterized in that** the edge fusion (23) is produced by applying an elevated temperature and/or an elevated pressure in the cutting region during cutting.

25. The use of a multiple layer laminate or of a print substrate, respectively, as claimed in one of claims 1 to 18 as covering material, packaging material, card material, security paper, in particular as a bank note, check, ticket, certificate, share document, bond document, document, identity documents or admission documents.

## Revendications

1. Stratifié multicouches utilisé en particulier comme support d'impression, par exemple comme papier de sécurité, qui comprend :
une seule couche de matière synthétique (22) réalisée d'un seul matériau qui présente un côté supérieur (20) et un côté inférieur (21), la seule couche de matière synthétique (22) étant un matériau polymère thermoplastique ,
au moins une couche supérieure de papier (11) reliée à la couche de matière synthétique (22) sur le côté supérieur (20) de la couche de matière synthétique (22),
la liaison entre la couche supérieure de papier (11) et la couche de matière synthétique (22) étant assurée essentiellement sans agent supplémentaire de renforcement de l'adhérence par une zone de pénétration (14) dans laquelle des parties de la couche en matière synthétique (22) sont fondues avec la pâte du composite de fibres de la couche de papier (11), la zone de pénétration (13, 14) ne s'étendant essentiellement pas jusqu'à la surface de la couche de papier (11) non tournée vers la couche de matière synthétique (22);
au moins une couche inférieure de papier (12) reliée à la couche de matière synthétique (22) est disposée sur le côté inférieur (21) de la couche de matière synthétique (22),
la liaison entre la couche inférieure de papier (12) et la couche de matière synthétique (22) étant assurée essentiellement sans agent supplémentaire de renforcement de l'adhérence par une zone de pénétration (13) dans laquelle des parties de la couche en matière synthétique (22) sont fondues avec la pâte du composite de fibres de la couche de papier (12), la zone de pénétration (13) ne s'étendant essentiellement pas jusqu'à la surface de la couche de papier (12) non tournée vers la couche de matière synthétique (22);
et au moins une des couches de papier (11, 12) présentant une caractéristique de sécurité et/ou la couche de matière synthétique (22) présentant au moins une caractéristique de sécurité qui présente la forme d'un moyen électrique, électronique, magnétique ou optique d'information ou une combinaison de ces moyens d'information,
**caractérisé en ce que**
le matériau polymère est un polyamide transparent, partiellement amorphe ou complètement amorphe
**en ce que** les couches de papier (11, 12) ont un poids par unité de surface compris dans la plage de 20 à 50 g/m² et **en ce que** la couche de matière synthétique (22) a une épaisseur comprise dans la plage de 20 à 50 µm, le stratifié multicouches ou support d'impression ainsi obtenu présentant un poids global par unité de surface compris dans la plage de 80 à 150 g/m² et **en ce que**
au moins une des couches de papier (11, 12) est traversée par une découpe (15-17) de telle sorte que la couche de matière synthétique (22) est libérée dans cette partie.

2. Stratifié multicouches selon l'une des revendications précédentes, **caractérisé en ce qu'**au moins une des couches de papier (11, 12) est un papier qui a été fabriqué dans une machine à tamis rond ou dans une machine à tamis long, de préférence en recourant comme matière première principale des fibres à un matériau de fibres cellulosiques telles que le coton et/ou la toile et/ou le lin.

3. Stratifié multicouches selon l'une des revendications précédentes, **caractérisé en ce que** le matériau polymère a une température de transition vitreuse comprise dans la plage de 50 à 250°C, de préférence dans la plage de 75 à 225°C ou dans la plage de 100 à 200°C et de façon particulièrement préférable dans la plage de 120 à 180°C, ou si la température de transition vitreuse est inférieure à la température ambiante, une température d'écoulement comprise dans la plage de 50 à 250°C, de préférence dans la plage de 75 à 225°C ou dans la plage de 100 à 200°C et de façon particulièrement préférable de 120 à 180°C.

4. Stratifié multicouches selon la revendication 4, **caractérisé en ce que** le matériau polymère est un polyamide à base de composants aliphatiques ou cycloaliphatiques, éventuellement avec des teneurs en composants aromatiques.

5. Stratifié multicouches selon l'une des revendications précédentes, **caractérisé en ce que** la ou les caractéristiques de sécurité de la couche de matière synthétique (22) sont sélectionnées parmi une impression, une zone fluorescente, une zone polarisante, une zone fluorescente polarisée, une zone absorbante polarisée, un hologramme, des zones photochromes, un microgaufrage, microperforation, une puce, une zone électriquement conductrice ou une zone magnétique.

6. Stratifié multicouches selon l'une des revendications précédentes, **caractérisé en ce que** la caractéristique de sécurité de la ou des couches de papier (11, 12) est sélectionnée parmi un filigrane et en particulier un filigrane (18) à niveaux de gris, un fil de sécurité (19), un OVD, des fibres Melier, des pigments de sécurité, des applications de couleurs irisées, une puce ou une bande magnétique.

7. Stratifié multicouches selon l'une des revendications précédentes, caractérisé en ce, les deux couches de papier (11, 12) présentent une découpe au moins partiellement superposée pour former une fenêtre (15-17), et de façon particulièrement préférable avec une bordure irrégulière respective glissante.

8. Stratifié multicouches selon la revendication 7, **caractérisé en ce que** la feuille de matière synthétique présente au moins une caractéristique de sécurité au moins dans la zone de la fenêtre (15-17).

9. Stratifié multicouches selon la revendication 8, **caractérisé en ce qu'**à l'aide d'au moins une fenêtre et en particulier à propriété polarisante, au moins une autre caractéristique de sécurité qui présente en particulier des propriétés polarisantes peut être vérifiée.

10. Stratifié multicouches selon l'une des revendications 7 à 9, **caractérisé en ce que** lors de la fabrication, une autre couche de matière synthétique qui présente le même contour de la fenêtre est placée dans la fenêtre dans la zone de la découpe (15-17).

11. Stratifié multicouches selon l'une des revendications précédentes, qui présente en particulier la forme d'un support d'impression, dont l'indice de double pliage qui vaut au moins le double de l'indice de double pliage d'une des couches individuelles de papier (11, 12), l'indice de double pliage étant de préférence plus de 5 fois et de façon particulièrement préférable plus de 10 fois ou même plus de 100 fois plus grand que l'indice de double pliage d'une des couches de papier (11, 12).

12. Stratifié multicouches selon l'une des revendications précédentes, **caractérisé en ce qu'**au moins une couche inférieure de papier (12) reliée à la couche de matière synthétique (22) est disposée sur le côté inférieur (21) de la couche de matière synthétique (22) et **en ce que** la liaison entre la couche inférieure de papier (12) et la couche de matière synthétique (22) est réalisée essentiellement sans agent supplémentaire de renforcement de l'adhérence par une zone de pénétration (13) dans laquelle des parties de la couche de matière synthétique (22) sont fondues à la pâte du composite de fibres de la couche de papier (12), la zone de pénétration (13) ne s'étendant essentiellement pas jusqu'à la surface de la couche de papier (12) non tournée vers la couche de matière synthétique (22) et **en ce que** le stratifié multicouches présente au moins un bord qui dispose au moins dans certaines parties d'une fusion de bordure (23) qui recouvre au moins en partie le bord latéral d'au moins une des couches de papier (11, 12), la fusion de bordure (23) étant de préférence formée de matériau de la couche de matière synthétique (22).

13. Stratifié multicouches selon l'une des revendications précédentes, **caractérisé en ce que** la profondeur de pénétration (13, 14) est telle qu'essentiellement au moins 10 µm de la surface d'au moins une des couches de papier (11, 12) non tournée vers la couche de matière synthétique (22) n'est essentiellement pas traversée par la matière synthétique.

14. Stratifié multicouches selon la revendication 13, **caractérisé en ce que** la profondeur de pénétration (13, 14) est telle qu'essentiellement au moins 15 µm, de préférence essentiellement au moins 20 µm et de façon particulièrement préférable essentiellement au moins 30 µm de la surface d'au moins une des couches de papier (11, 12) non tournée vers la couche de matière synthétique (22) ne sont essentiellement pas traversés par la matière synthétique.

15. Stratifié multicouches selon l'une des revendications précédentes, **caractérisé en ce que** la profondeur de pénétration (13, 14) présente une épaisseur d'au moins 10 µm, de préférence d'au moins 15 µm et de façon particulièrement préférable d'au moins 30 µm.

16. Stratifié multicouches selon l'une des revendications précédentes, **caractérisé en ce que** la profondeur de pénétration (13, 14) présente une épaisseur différente dans certaines zones.

17. Stratifié multicouches selon l'une des revendications précédentes, **caractérisé en ce que** la couche de matière synthétique (22) est polarisante et/ou fluorescente et/ou phosphorescente et/ou à diffraction optique, avec de façon particulièrement préférable une absorption polarisée et/ou une émission polarisée.

18. Support d'impression, matériau d'emballage, matériau de recouvrement, papier de sécurité et en particulier billet de banque, chèque, ticket, certificat, titre commercial, document obligataire, document officiel, document d'identité, document d'accès fabriqués à partir d'un stratifié multicouches selon l'une des revendications précédentes.

19. Procédé de fabrication d'un stratifié multicouches selon l'une des revendications 1 à 18, **caractérisé en ce que** dans un stratificateur, on fait fondre au moins en partie les couches de papier (11, 12) avec la couche de matière synthétique (22), en utilisant une température comprise dans la plage de 50 à 250°C, de préférence dans la plage de 75 à 225°C ou dans la plage de 100 à 200°C et de façon particulièrement préférable dans la plage de 140 à 180°C, et on utilise une pression comprise dans la plage de 10 Pa à 10 MPa, de préférence de 1 kPa à 10 MPa ou de 1 kPa à 5 MPa et de façon particulièrement préférable dans la plage de 0,5 MPa à 2 MPa.

20. Procédé selon la revendication 19, **caractérisé en ce que** l'on augmente la température d'abord en partant de la température ambiante jusqu'à la température visée, la pression étant ensuite augmentée de la pression normale à la pression visée.

21. Procédé selon l'une des revendications 19 ou 20, **caractérisé en ce qu'**il s'agit d'un procédé continu dans lequel les différents supports (11, 12, 22) sont apportés par des rouleaux et **en ce que** le stratificateur est un stratificateur à rouleaux, la couche de matière synthétique (22) étant apportée au milieu et les deux couches de papier (11, 12) respectivement par le haut et par le bas en appliquant de façon particulièrement préférable une poussée linéaire comprise dans la plage de 1 à 500 N/mm.

22. Procédé selon l'une des revendications 19 à 21, **caractérisé en ce que** comme couche de matière synthétique (22), on utilise au moins dans certaines parties une feuille étirée à propriétés polarisantes.

23. Procédé selon l'une des revendications 19 à 22, **caractérisé en ce que** le stratifié multicouches est découpé et/ou post-traité et en particulier post-stratifié localement de manière à former dans la zone d'au moins une bordure une fusion de bord (23).

24. Procédé selon la revendication 23, **caractérisé en ce que** la fusion du bord (23) est formée en appliquant une température et/ou une pression plus élevée dans la zone de coupe lors de la coupe.

25. Utilisation d'un stratifié multicouches ou d'un support d'impression selon l'une des revendications 1 à 18 comme matériau de recouvrement, matériau d'emballage, matériau de carte, papier de sécurité et en particulier comme billet de banque, chèque, ticket, certificat, titre commercial, document obligataire, document officiel, documents d'identité ou documents d'accès.
